# EUROPEAN PATENT APPLICATION

(11) **EP 4 657 353 A1**
(43) Date of publication of application: **03.12.2025**
(21) Application number: 25179766.8
(22) Date of filing: 29.05.2025
(51) Int. Cl.: G06Q 30/0201, G06F 11/34, H04L 67/02, H04L 67/50

(54) **WEBSITE VISITOR ENGAGEMENT SCORING**

(30) Priority: 29.05.2024 US 202418676723
(71) Applicant: Siteimprove A/S, 1250 Copenhagen (DK)
(72) Inventor: LAUMAND, Søren, DK-1250 Copenhagen (DK); ROSLER CHABERT, Christina, DK-1250 Copenhagen (DK)
(74) Representative: Marks & Clerk LLP

(57) **Abstract**

Disclosed are techniques for designating a scoring framework for scoring a website based on visitor engagement. A method can include: receiving tracking data recorded at a client-side computing device when a user at the client-side computing device performs actions, during a session, in a website associated with a website owner, identifying events in the tracking data, transmitting the identified events for presentation in a graphical user interface (GUI) display at a computing device of the website owner, receiving input indicating selection of a subset of the identified events to be tracked and a score value assignment for each event in the subset, designating a scoring framework based on the received input, the scoring framework being automatically applied to tracking data from sessions with the website that are associated with client-side computing devices to determine visitor engagement scores for the website, and storing the scoring framework in association with the website.

## Description

### TECHNICAL FIELD

This disclosure generally describes devices, systems, and methods related to generating frameworks for scoring visitor engagement with websites and presenting visitor engagement scores that are determined using the frameworks in graphical user interface (GUI) displays at computing devices of related website owners.

### BACKGROUND

A website is a collection of webpages and digital content that can be served and presented to users over network connections, such as the Internet. The website can include various functionality with which users (e.g., visitors) may interact. For example, the website can include selectable buttons, input fields, videos, images, etc.

Users or visitors can engage or interact with the digital content and the website as a whole in a variety of ways, or events. The events may encompass a wide range of activities, including but not limited to clicking on links or buttons, submitting forms, watching videos, scrolling through content, making purchases, sharing content, providing input to one or more input fields, etc. The different types of actions that the users may perform generate data points that may be analyzed to understand user behavior and/or preferences.

User activity on the website can be assessed in a variety of ways. For example, the user activity can be monitored using tools that can assess metrics including but not limited to page views, bounce rate, time spent on a webpage of the website, and/or conversion rates.

### SUMMARY

The disclosure generally describes technology and techniques for designating scoring frameworks and using those frameworks to score websites. A framework can be designated by an owner, or other relevant user, of a website. The framework can be used to assess visitor engagement with the website or otherwise determine and assign visitor engagement scores for the website and/or particular pages of the website. A visitor engagement score can, for example, be determined on a per-session basis. The framework can be updated and/or designated over time by the owner, which can result in a computing system automatically and retroactively updating historic visitor engagement scores for the website. Visitor engagement scoring metrics may also be presented in one or more GUIs described herein, such as in a display at a computing device of the website owner.

By capturing and interpreting various website-specific visitor engagement events, the website owner and other relevant users may gain insights into how visitors interact with the website, identify patterns and trends, identify areas of improvement for quality, presentation, and/or digital content of the website, and make informed decisions to enhance or otherwise improve the visitor (e.g., user) experience. Additionally, visitor engagement tracking and scoring as provided by the disclosed technology can help assess effectiveness of the digital content of the website, marketing efforts, and overall website performance, thereby enabling informed decision-making to improve the website, enhance visitor experiences with the website, and/or achieve business goals.

In some implementations, a visitor engagement score for a particular website can be based on data points that are collected/tracked for the website. A foundation for the score can then be configured by the website owner by setting up triggers (e.g., events, actions) that each contribute to the score by a certain amount (an amount that can be defined or otherwise set by the website owner). As an illustrative example, visitors to a website who perform many and/or high-scoring triggers (e.g., events, actions) may receive a high visitor engagement score, while visitors who interact very little on the website may receive a lower score.

Accordingly, the disclosed technology can present website owners with the ability to generate customized visitor engagement scoring frameworks through website-specific events and/or actions, such as a particular button or link being selected on the website. The website owners can identify custom values for events and/or actions that are specific to the website. The scoring framework may not be fixed, and rather can be a result of the website owner's customized configurations in a platform that can be provided by and presented in GUI displays of the website owner's computing device. Additionally, the disclosed technology can provide for retroactive scoring and tracking over time of visitor engagement scores for a particular website so that if one or more customized factors included in a scoring framework are updated, historical visitor engagement scores for the website against which they are compared may also be updated.

One or more embodiments described herein can include a method for designating a scoring framework for scoring a website based on visitor engagement, the method including: receiving, by a computer system and from a client-side computing device, tracking data that can be recorded at the client-side computing device when a user at the client-side computing device performs actions, during a session, in a website associated with a website owner, identifying, by the computer system, events in the tracking data, transmitting, by the computer system and to a computing device of the website owner, the identified events for presentation in a graphical user interface (GUI) display at the computing device of the website owner, receiving, by the computer system and from the computing device of the website owner, input indicating (i) selection of a subset of the identified events to be tracked and (ii) a score value assignment for each event in the subset of events, designating, by the computer system, a scoring framework based on the received input, the scoring framework including the selected events to be tracked and the corresponding score value assignments, the scoring framework being automatically applied, by the computer system, to tracking data from sessions with the website that are associated with a group of client-side computing devices to determine visitor engagement scores for the website, and storing, by the computer system, the scoring framework in association with at least one of an identifier uniquely associated with the website owner or an identifier uniquely associated with the website.

In some implementations, the embodiments described herein can optionally include one or more of the following features. For example, the method further can include: receiving, by the computer system and from the group of client-side computing devices, the tracking data for the sessions with the website, applying, by the computer system, the scoring framework to the tracking data for the sessions with the website to assign scores to the sessions. Applying the scoring framework can include: identifying, in the tracking data for each session of the sessions, presence of one or more of the selected events from the scoring framework, and assigning, to each of the identified one or more of the selected events, the corresponding score value. The method can also include generating, by the computer system, an average visitor engagement score for the website based on assigning the scores to the sessions. The method also can include: storing, by the computer system, the assigned scores to the sessions in association with the website and the respective sessions in a data store. The method can include storing, by the computer system, the average visitor engagement score in association with the website in a data store.

Sometimes, the method may include generating, by the computer system, output for the average visitor engagement score, and transmitting, by the computer system to the computing device of the website owner, instructions for presenting the output for the average visitor engagement score in a GUI display at the computing device of the website owner. The instructions, when executed by the computing device of the website owner, can cause the computing device of the website owner to present in the GUI display, a visual element indicating a value of the average visitor engagement score. The instructions, when executed by the computing device of the website owner, can cause the computing device of the website owner to present in the GUI display, a graphical element indicating a change in value of the average visitor engagement score over one or more periods of time. The instructions, when executed by the computing device of the website owner, can cause the computing device of the website owner to present in the GUI display, textual elements indicating event triggers that contributed to a determination of the average visitor engagement score. Sometimes, the instructions, when executed by the computing device of the website owner, can cause the computing device of the website owner to present in the GUI display, visual elements indicating information about one or more sub-scores that may include the average visitor engagement score. The one or more sub-scores can include the scores assigned to the sessions based on applying the scoring framework.

In some implementations, receiving, by the computer system, the tracking data that may be recorded at the client-side computing device can be in response to: the client-side computing device requesting and receiving, from web servers, code for the website, the client-side computing device loading the website at the client-side computing device using the code, requesting, from a tracking system, a resource for the website, receiving, from the tracking system, tracking code, loading the tracking code at the client-side computing device, and recording the user actions, during the session, in the website using the tracking code. The method may also include retrieving, by the computer system from a data store, historic tracking data from historic sessions associated with the website, applying, by the computer system, the scoring framework to the historic tracking data to retroactively generate visitor engagement scores for the historic sessions associated with the website, and generating, by the computer system, output indicating the retroactively generated visitor engagement scores for the historic sessions and the average visitor engagement score for the sessions, the sessions including a current period of time. The output may also include a graph that visually depicts a change in score value between the retroactively generated visitor engagement scores for the historic sessions and the average visitor engagement score for the sessions.

In some implementations, the method may also include: providing, by the computer system, tracking code to the client-side computing device, the client-side computing device being configured to execute the tracking code when loading the website, the execution of the tracking code causing the client-side computing device to automatically generate the tracking data as the user performs the actions in the website. The events can include at least one of clicks, scrolls, idleness, user inputs, outbound links, views, or URL visits.

One or more embodiments described herein can include a method for designating and applying a scoring framework to score a website based on visitor engagement, the method including: receiving, by a computer system, tracking data that can be recorded at each of a group of client-side computing devices when respective users perform actions, during respective sessions, in a website associated with a website owner, identifying, by the computer system, events in the tracking data, at least a portion of the events being related to specific DOM elements on the website, transmitting, by the computer system and to a computing device of the website owner, the identified events for presentation in a graphical user interface (GUI) display at the computing device of the website owner, receiving, by the computer system and from the computing device of the website owner, input indicating (i) selection of a subset of the identified events to be tracked and (ii) a score value assignment for each event in the subset of events, designating, by the computer system, a scoring framework based on the received input, the scoring framework including the selected events to be tracked and the corresponding score value assignments for the website, applying, by the computer system, the scoring framework to the tracking data, the applying further including: identifying, in the tracking data, presence of one or more of the selected events from the scoring framework, and assigning, to each of the identified one or more of the selected events, the corresponding score value, and then generating, by the computer system, an average visitor engagement score for the website based on applying the scoring framework.

The method can optionally include one or more of the abovementioned features and/or one or more of the following features. For example, the respective sessions can include current sessions with the website. The respective sessions can include historic sessions with the website. The respective sessions can include current sessions and historic sessions with the website.

Sometimes, generating, by the computer system, an average visitor engagement score for the website can include (i) generating an average visitor engagement score for the current sessions and (ii) generating an average visitor engagement score for the historic sessions. The method can also include generating, by the computer system, output indicating a comparison of the average visitor engagement score for the current sessions with the average visitor engagement score for the historic sessions and transmitting, by the computer system and to the computing device of the website owner, the output for presentation in a GUI display at the computing device of the website owner. The output may include a graphical element that visually displays the comparison of the average visitor engagement score for the current sessions with the average visitor engagement score for the historic sessions.

One or more embodiments described herein can include a method for determining a visitor engagement score for a website using a scoring framework, the method including: receiving, by a computer system, tracking data that may be recorded at a group of client-side computing devices when respective users performs actions, during respective sessions, in a website associated with a website owner, retrieving, by the computer system and from a data store, a scoring framework associated with the website, the scoring framework including website owner-selected events to be tracked in the tracking data and website owner-designated score values to be assigned to each instance of the website owner-selected events that can be identified by the computer system in the tracking data for the sessions, applying, by the computer system, the scoring framework to the tracking data for the sessions, where applying the scoring framework further may include: identifying, in the tracking data, presence of one or more of the website owner-selected events from the scoring framework, and assigning, to each of the identified events, the corresponding website owner-designated score values, and then generating, by the computer system, an average visitor engagement score for the website for the sessions based on applying the scoring framework.

The method can optionally include one or more of the abovementioned features and/or one or more of the following features. For example, the respective sessions can include current sessions and historic sessions with the website. Generating, by the computer system, an average visitor engagement score for the website can include (i) generating an average visitor engagement score for the current sessions and (ii) generating an average visitor engagement score for the historic sessions. The method may also include generating, by the computer system, output indicating a comparison of the average visitor engagement score for the current sessions with the average visitor engagement score for the historic sessions and transmitting, by the computer system and to a computing device of the website owner, the output for presentation in a GUI display at the computing device of the website owner. Sometimes, the method can include generating, by the computer system, output indicating the average visitor engagement score for the sessions and transmitting, by the computer system to a computing device of the website owner, the output for presentation in a GUI display at the computing device of the website owner.

The devices, system, and techniques described herein may provide one or more of the following advantages. For example, the disclosed technology can provide an easy-to-use, user-friendly platform presented in GUI displays for website owners to generate and/or update website-specific scoring frameworks. The disclosed technology further may allow for the website owners to dynamically modify their scoring frameworks, thereby causing the disclosed technology to automatically and retroactively update historic visitor engagement scores for the website. As a result, the updated historic scores can be compared against current scores to provide the website owners with holistic and accurate visitor engagement assessments of their website.

The disclosed technology can provide one score or metric that encapsulated overall performance and/or engagement for a website owner's website. The singular metric, determined based on assessment and combination of many different data points defined by the website owner, can provide a simple, easy-to-understand, visual and numeric indication of the performance of the website. The website owner can easily use this one score to assess engagement of visitors with the website and ways in which to improve the website and visitor experiences. The disclosed scoring techniques may help the website owner understand and analyze how many interactions, the types of interactions, and/or the quality of such interactions between the visitors and the website. Any of these analytics and/or insights may be used by the website owner to improve the quality of their website and/or overall visitor experiences with the website.

As additional examples, the disclosed visitor engagement scoring techniques can help the website owner understand how visitors interact with their website, what content the visitors find valuable, and/or which areas of the website may be confusing or uninteresting to the visitors. Such analytics can inform website improvements and/or content strategies. Similarly, by tracking and analyzing engagement metrics including but not limited to clicks, user input, link clicks, bounce rate, time on page, pages per session, etc., the website owner can identify visitor experience (e.g., user experience or UX experience) issues and make one or more adjustments to enhance the overall visitor experience. Moreover, visitor engagement metrics can provide insights into effectiveness of calls-to-action (CTAs), forms, and/or conversion funnels. By monitoring such engagement metrics, the website owner can optimize conversion paths to achieve their desired business goals, whether it's making a purchase, signing up for a newsletter, filling out a contact form, etc. Measuring engagement can also help the website owner in evaluating performance of different types of digital content (e.g., blog posts, videos, infographics). By identifying which content resonates most with visitors, the website owner can tailor their content strategy to better meet audience interests and preferences. Engagement metrics can also provide valuable feedback about effectiveness of marketing campaigns and channels. By tracking metrics such as referral traffic and social shares, for example, the website owner can identify marketing efforts that may be driving the most engaged visitors and allocate resources accordingly. Sudden changes in engagement metrics can also indicate technical issues or external factors that may impact the website's performance. Regular monitoring of the visitor engagement with the website can allow the website owner to quickly and efficiently identify and address issues that may arise with their website's overall health.

To provide robust analysis of visitor engagement with a website, the disclosed technology can use a complex collection of algorithms and other data processing techniques to analyze many different data points related to events, actions, or triggers that are defined by the website owner for purposes of tracking and assessing visitor engagement with the particular website. This complex collection of data processing techniques can provide an unconventional solution to the problem of accurately and dynamically assessing visitor engagement with the particular website. This unconventional solution can be rooted in technology and provides information that was not available in conventional systems. This unconventional solution also represents an improvement in the subject technical field otherwise unrealized by conventional systems. Specifically, unlike conventional systems, the disclosed technology may dynamically combine and assess various different website owner-defined events in the website over time to generate visitor engagement scores and also retroactively update historic scores based on dynamic changes that the website owner may make to their scoring framework.

After the disclosed technology determines current and/or updated historic visitor engagement scores, the disclosed technology can display relevant information and data using a GUI on a display of computing devices of the website owners in a unique and easy to understand format. Conventional systems may not provide the disclosed solutions for at least the following reasons: (i) the significant processing power required to dynamically track visitor actions on the website and dynamically generate and/or update visitor engagement scores accordingly, (ii) the considerable data storage requirements for maintaining information collected and determined by the disclosed technology, (iii) a large enough pool of data to provide accurate scoring determinations and assessments, (iv) data processing techniques that allow for scoring frameworks be dynamically updated in light of additional data and/or input provided by the website owner, and/or (v) other hardware and software features discussed below.

Moreover, translation of outcomes from performing the disclosed complex data processing techniques through GUIs can improve the website owners' comprehension of considerable quantities of highly processed data. For example, an exemplary technique can include: tracking various visitor actions and events on the website, selecting some of the tracked actions for processing and analysis, ignoring some of the data that was tracked, performing multiple calculations on a selected subset of the tracked data, combining data from these multiple calculations and then outputting that data within a short amount of time (e.g., preferably less than a minute).

The details of one or more implementations are set forth in the accompanying drawings and the description below. Other features and advantages will be apparent from the description and drawings, and from the claims.

### BRIEF DESCRIPTION OF THE DRAWINGS

FIG. 1A is a conceptual diagram of a system for assessing and scoring visitor engagement for a website on a per-session basis.
FIG. 1B is a conceptual diagram of a system for updating historic visitor engagement scores for a website when the website owner updates a respective scoring framework.
FIG. 2 is a system diagram illustrating one or more system components that can be used to perform the disclosed techniques.
FIGs. 3A, 3B, and 3C illustrate a flowchart of a process for generating a score, such as a visitor engagement score, for a website using a user-defined scoring framework.
FIGs. 4A and 4B illustrate a flowchart of a process for designating a scoring framework and retroactively adjusting scores, such as visitor engagement scores, that have been determined for a website using the scoring framework.
FIG. 5 illustrates an example graphical user interface (GUI) for designating a scoring framework for a website.
FIGs. 6A and 6B illustrate example GUIs for viewing visitor engagement score metrics for a website.
FIGs. 7A and 7B illustrate an example GUI for viewing visitor engagement scoring metrics for a page of a website.
FIGs. 8A, 8B, and 8C illustrate example GUIs for viewing campaign metrics for a website.
FIG. 9 is a schematic diagram that shows an example of a computing device and a mobile computing device.

In the present disclosure, like-numbered components of various embodiments generally have similar features when those components are of a similar nature and/or serve a similar purpose, unless otherwise noted or otherwise understood by a person skilled in the art.

### DETAILED DESCRIPTION OF ILLUSTRATIVE EMBODIMENTS

This disclosure generally relates to systems, methods, and techniques for generating a scoring framework and scoring activities, such as visitor engagement, using the framework for a website and/or pages (e.g., webpages) of the website. The disclosed techniques may include identifying, tracking, and making available site-specific user (e.g., visitor) interactions for customized engagement scoring of the website. The disclosed technology also may provide GUIs through which site-specific interactions can be selected by the website owner or other relevant user, weighted, and included in visitor (e.g., user) engagement scoring for the website. The disclosed techniques further may include a platform for determining and presenting visitor engagement scoring on a website, including but not limited to comparisons against historical scores for the website and retroactively updating historical scores when a new and/or updated scoring framework (e.g., score weighting) is designated by the website owner or other relevant user.

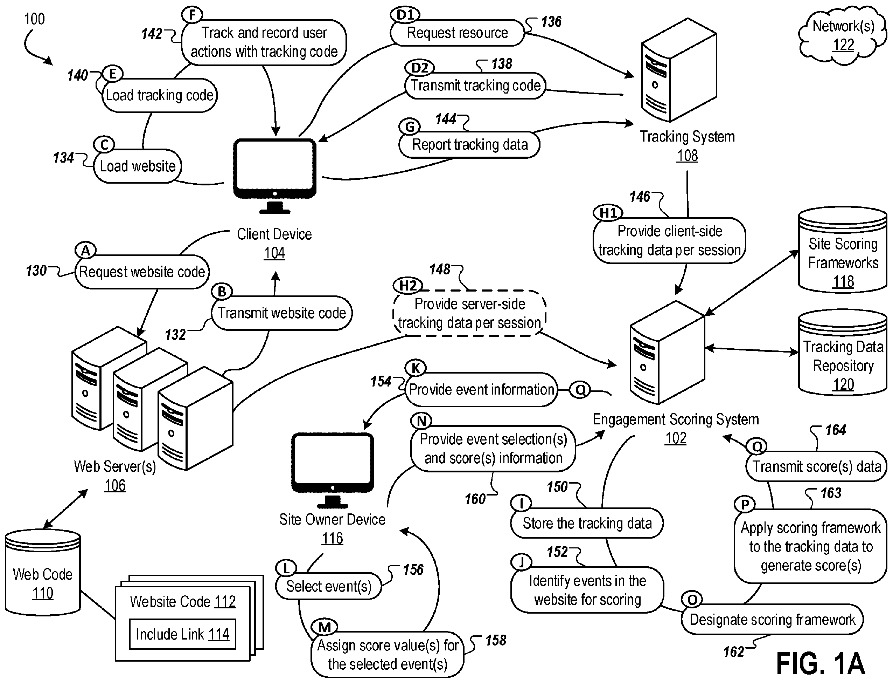

Referring to the figures, FIG. 1A is a conceptual diagram of a system 100 for assessing and scoring visitor engagement for a website on a per-session basis. An engagement scoring system 102, a client device 104, web server(s) 106, a tracking system 108, a web code data store 110, a site owner device 116, a site scoring framework data store 118, and a tracking data repository data store 120 can be configured to communicate (e.g., wired, wirelessly) with each other via network(s) 122.

In brief, the engagement scoring system 102 can be any type of computing system or network of computing systems/devices configured to perform the techniques described herein, such as generating visitor engagement scores for a website of a website owner. The engagement scoring system 102 may also receive information/input from the site owner device 116, which can be used by the system 102 to designate and/or update scoring frameworks for the website owner and/or the particular website. The scoring frameworks can be stored and accessed by the engagement scoring system 102 at the site scoring framework data store 118. Moreover, data that is tracked about visitor activity at the client device 104 can be received by the engagement scoring system 102 and stored in the tracking data repository data store 120.

The client device 104 can be any type of computing device and/or computing system configured to provide/present, in a display, one or more of the GUIs described herein. The client device 104 can be used by a visitor to the website. For example, a user can access the website at the client device 104 and perform actions or otherwise interact with the website presented in a GUI display of the client device 104.

The web server(s) 106 can be configured to host code for webpages of websites, such as the website described herein. The code can be retrieved from the web code data store 110 by any of the systems described herein, such as the client device 104 and/or the web server(s) 106, to render a webpage (such as at the client device 104).

The tracking system 108 can be configured to provide techniques for tracking visitor (e.g., user) activities with one or more webpages and/or websites at their respective client devices 104. The tracking system 108 can, in some implementations, be the same as the engagement scoring system 102. Sometimes, the tracking system 108 and the engagement scoring system 102 can be sub-systems of one system. The tracking system 108 can be similar to a third party data analytics provider, in some implementations. The tracking system 108 can identify, determine, and/or retrieve search ranking, position/ranking, and/or other relevant information about keywords, webpages, and/or websites (such as the website described herein). The tracking system 108 can utilize one or more APIs to generate and/or maintain relevant information about the website. For example, the tracking system 108 can be configured to generate and provide tracking code to the client device 104. The client device 104 can execute the tracking code in order to track visitor interactions and actions with the website presented at the client device 104.

The site owner device 116 can be any type of computing device and/or computing system configured to provide/present, in a display, one or more of the GUIs described herein. The device 116 can be used by the owner of the website, or another relevant stakeholder. Sometimes, the user associated with the website may be a customer of services provided by the engagement scoring system 102. At the device 116, the website owner can view information about the website, such as visitor engagement scoring metrics, campaigns, etc., all of which may be provided in GUIs by the engagement scoring system 102. The website owner can also use the device 116 to update and/or designate scoring frameworks for use in assessing visitor engagement with the website.

Still referring to FIG. 1A, the engagement scoring system 102 can assign a visitor engagement score whenever a user, or visitor, accesses and/or uses the website at the client device 104. The score can be determined using a scoring framework that is generated based on input provided by the website owner at the site owner device 116. The visitor engagement score can be determined whenever a visitor loads up a page for the website. Sometimes, the score can be predetermined and then dynamically updated in real-time or near real-time once the visitor loads up the page or otherwise accesses the website . For example, the score can be calculated once an initial webpage load of a visit has occurred. After that initial webpage load of the visit, the score for the visit can accumulate points described further below in response to detecting website-owner selected triggering events (e.g., page views, document views, event data, clicking links to external websites, submitting feedback).

As shown in the system 100 of FIG. 1A, the client device 104 can request website code from the web server(s) 106 in block A (130). In other words, the user or visitor at the client device 104 may provide or type a URL into a web browser displayed at the client device 104 for the website of interest. The visitor may select a website presented in a search engine at the client device 104 as another illustrative example.

The web server(s) 106 can access the web code data store 110 to retrieve website code 112 and an include link 114, which corresponds to the website code being requested by the client device 104. The include link 114 can be configured to allow for including or importing content from one file into another. In the illustrative example of FIG. 1A, the include link 114 can be used to import tracking code into the website code for the website that is launched/loaded at the client device 104. The web server(s) 106 can then transmit the retrieved website code 112 with the include link 114 back to the client device 104 in block B (132).

Accordingly, the client device 104 can load the website using the received website code 112 having the include link 114 in a GUI display (block C, 134). Loading the website can also include interpreting the website code and/or sending resource requests as described below.

The client device 104 may request a resource from the tracking system 108 (block D1, 136). The resource may be requested using the include link 114. As described above, the tracking system 108 can be a third party server, service, and/or computing system, which can provide analytics and/or tracking of analytics with regards to the website that is loaded at the client device 104.

Accordingly, the tracking system 108 can transmit tracking code in D2 (138) to the client device 104.

The tracking code can be loaded at the client device 104 into the website code 112 with the include link 114 (block E, 140). Action/activity events can be generated by small bits of code on a crawl script (which can be provided by loading the tracking code form the tracking system 108 at the client device 104 in block E, 140), which can be configured to track and record those actions/activities. Analytics tracking may also be performed on JAVASCRIPT, as another example. The tracked and recorded data in block F (142) can include, but is not limited to, page views and/or URLs, outbound link URLs, particular types of events (e.g., clicking on a button, hovering over digital content in a webpage, providing user input), feedback/survey responses, etc.

Once the tracking code is loaded, the client device 104 may track and record user (e.g., visitor) actions/activity with the website and/or with particular webpages of the website at the client device 104 (block F, 142). Loading the tracking code at the client device 104 can cause the client device 104 to listen for user activity that points to or otherwise is related to one or more Document Object Model (DOM) elements on/for the website. The tracking code may allow for the client device 104 to hook into specific DOM elements using event listeners for various events linked to or otherwise related to those specific DOM elements. The event listeners can be configured to monitor for different types of events related to different DOM elements (e.g., mouse clicks). As other examples, the event listeners can be attached to relevant DOM elements to track visitor interactions, including but not limited to form submission event listeners attached to forms. As another example, When an event is triggered (e.g., a click, form submission), the event listener(s) may execute functions to collect information about the event and the associated DOM element. This information may include details such as the type of event, the DOM element, and relevant data associated with the event (e.g., form input values).

The client device 104 can track and record the data over sessions. For example, for every session, a session log can be generated with activity tracking data indicating actions and other activities performed by the website visitor at the client device 104. The tracking data can therefore include session logs, which can be generated with activity/actions data of the visitor to the website. That activity/actions data can include but is not limited to buttons that the visitor clicks on in the website or on particular webpages of the website, input that the visitor provides to input fields in the website or on particular webpages of the website, etc.

The client device 104 may also report tracking data to the tracking system 108 in block G (144). The tracking data can be reported to the tracking system 108 whenever the data is generated/recorded. In some implementations, the tracking data can be reported to the tracking system 108 at predetermined time intervals (e.g., every 5 minutes, every 10 minutes, every 30 minutes, every 1 hour, every 4 hours, every 12 hours, every 24 hours). Sometimes, the tracking data can be reported to the tracking system 108 once the visitor completes a session at the client device 104 during which the visitor interacts with the loaded website.

The tracking system 108 can provide the client-side tracking data per session to the engagement scoring system 102 in block H1 (146). Refer to block G (144) for further discussion about potential timing for providing the data to the system 102.

Optionally, the web server(s) 106 may provide server-side tracking data per session to the engagement scoring system 102 in block H2 (148). Sometimes, the web server(s) may be configured to generate tracking data from the perspective of the server(s). This tracking data may be provided as additional inputs to the engagement scoring system 102 to assess visitor engagement for the loaded website. Refer to block G (144) for further discussion about potential timing for providing the data to the system 102.

In block I (150), the engagement scoring system 102 can store the received tracking data. The tracking data may be stored in the tracking data repository 120. The system 102 can store the tracking data in its original form that is received from the tracking system 108. Storing the tracking data may include storing attributes indicating different activities and/or actions that occur on one or more webpages and/or the website during each session. As described herein, the tracking data can be stored in the repository 120 so that if a scoring framework is designated and/or changed for the website (and/or for particular webpages or webpage), the tracking data can be quickly retrieved and processed by the engagement scoring system 102 to retroactively update and/or generate visitor engagement scores for the website according to the scoring framework.

The engagement scoring system 102 can also identify events on the website for scoring in block J (152). For example, the system 102 can parse through the tracking data to identify what activity/action events occur/are recorded for the particular session, such as events data. Accordingly, the engagement scoring system 102 can identify the events data using additional tracking features that can be added to the tracking code (e.g., tracking script). The events can include, but are not limited to specified button selections or clicks (e.g., accordions, carousels, interactive guides), scroll actions, video activations, specified interactions with digital content in the website, quantity of pages viewed by the visitor, pages viewed by the visitor, URL visits, length of time spent on a particular webpage or one or more webpages in the website, etc. In block J (152), the system 102 can also identify events such as clicks to external/outbound links, and/or external events, such as feedback on the website and/or comments left on/for the website.

The engagement scoring system 102 can provide event information to the site owner device 116 in response to identifying the events for scoring in the tracking data for the website (block K, 154). The event information may include a list and/or other relevant information indicating the events (or a subset or portion thereof) that were identified by the system 102 in block J (152). Sometimes, the information can include default guided settings to help the site owner decide what events should be identified and considered triggering of visitor engagement with their website. The default guided settings can include recommendations of which events to track and score values to assign to those events. The site owner may choose to adopt any of the recommendations and/or select different events and/or score value assignments.

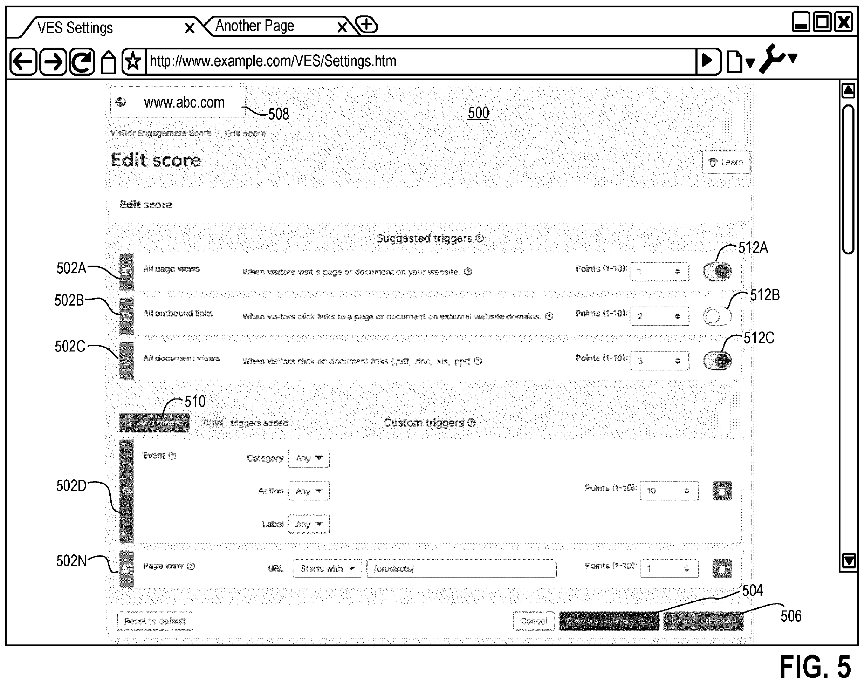

In block L (156), the site owner device 116 can receive user input to select one or more of the events that are identified in the event information. The events can provided to the site owner or otherwise presented in one or more GUIs at the device 116, similar to the GUI described in reference to FIG. 5. The site owner can view the events that had been identified per session for the website and select which of those events the site owner desires to track for purposes of assessing visitor engagement with their website, a particular webpage of the website, and/or a group of websites associated with the site owner. As a result, the site owner can customize how visitor engagement is tracked and assessed for their website(s). As described herein, the site owner can also update and/or change which event or events are tracked and assessed for the website(s) at any time. Refer to FIG. 5 for further discussion.

The site owner device 116 can assign one or more score values to the one or more selected events in block M (158). In other words, the site owner can provide user input indicating the score value(s) for the selected event(s). The score value(s) can be used by the engagement scoring system 102 to determine how many points should be allocated to each instance of the selected event(s) in the session data and/or tracking data for future sessions. Refer to FIG. 5 for further discussion about the score value(s) and assigning these value(s).

The site owner device 116 can provide event selection(s) and score(s) information to the engagement scoring system 102 in block N (160). The provided information can indicate which events the user selected in block L (156) as triggering monitoring, assessment, and/or scoring. In other words, the provided information can be used by the engagement scoring system 102 to determine what particular events in tracking data for the website would trigger identification and assignment of the score value(s). The provided information may include identifiers that can uniquely identify and associate the site owner, the website, and/or a particular webpage of the website with the event selection(s) and/or the score(s) information.

In some implementations, the device 116 may only receive event selection(s) in block L (156) but no score value assignment(s) in block M (158). As a result, the device 116 may only transmit the event selection(s) to the system 102 in block N (160). Sometimes, the device 116 may only receive score value assignment(s) in block M (158) (such as updated score value assignments for one or more events) and no event(s) selection(s) in block L (156), so the device 116 may only transmit the score value assignment(s) in block N (160).

The engagement scoring system 102 can designate a scoring framework in block O (162) based on the provided event selection(s) and score(s) information. As described further herein, if a scoring framework already exists in association with (e.g., based on the uniquely identifying identifiers) the site owner, the website, and/or the particular webpage, then the system 102 can retrieve the existing framework using the associated identifier from the site scoring framework data store 118 and update that framework according to the provided information. If a scoring framework does not yet exist in association with the site owner, the website, and/or the particular webpage, the system 102 can designate or otherwise generate/create a scoring framework. The scoring framework may indicate which triggering events are to be identified in tracking data and scored according to the assigned score values. The scoring framework can be designated for a specific website, a specific webpage, a group of websites, etc. The site owner may provide user input at the site owner device 116 indicating the website(s) and/or webpage(s) for which to apply the scoring framework.

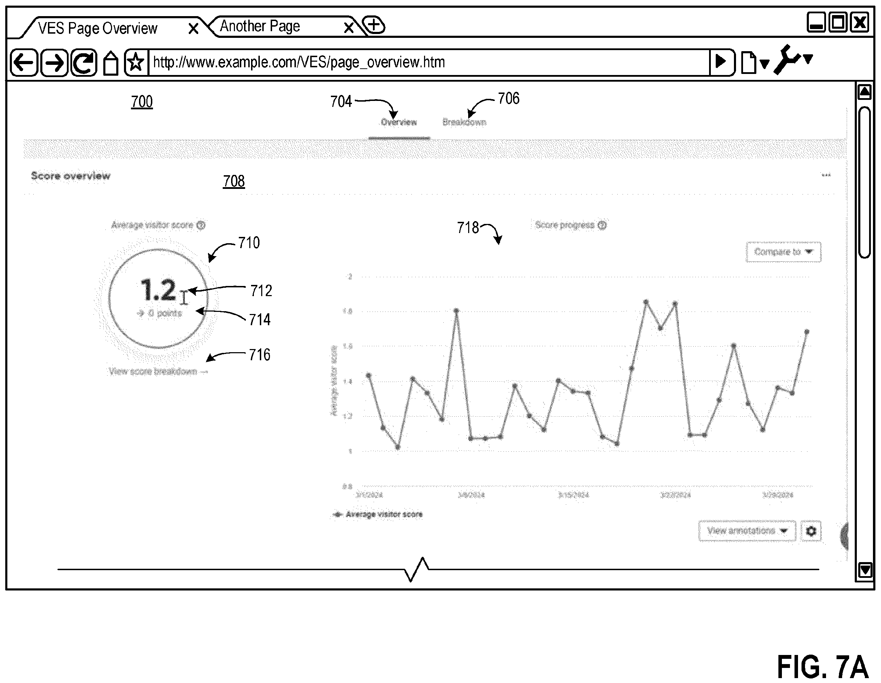

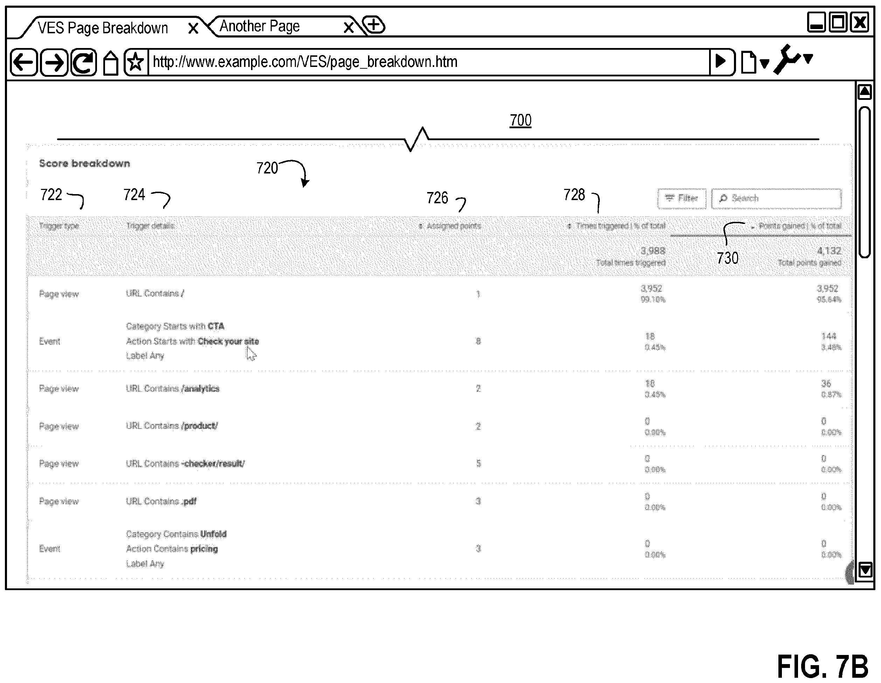

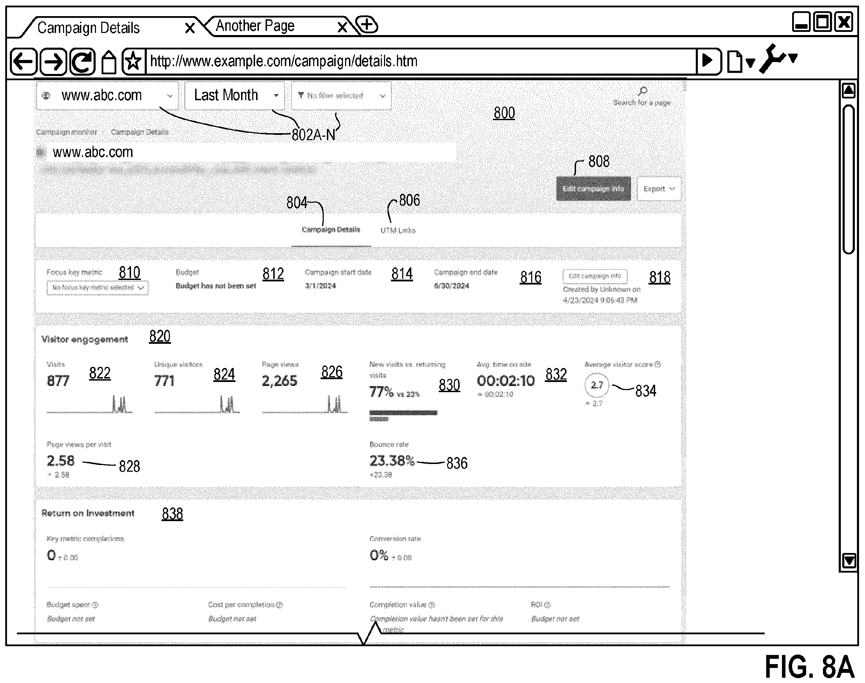

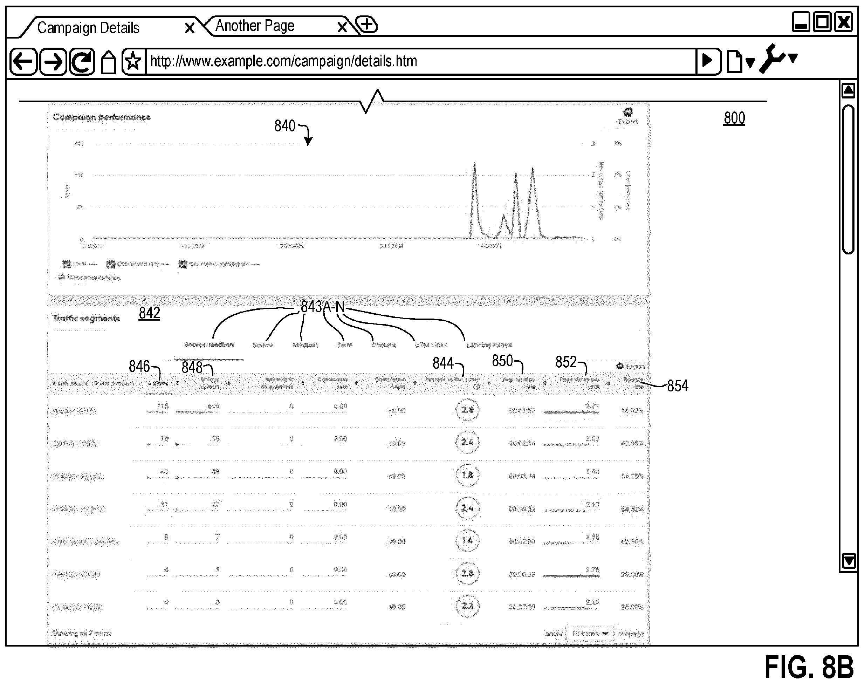

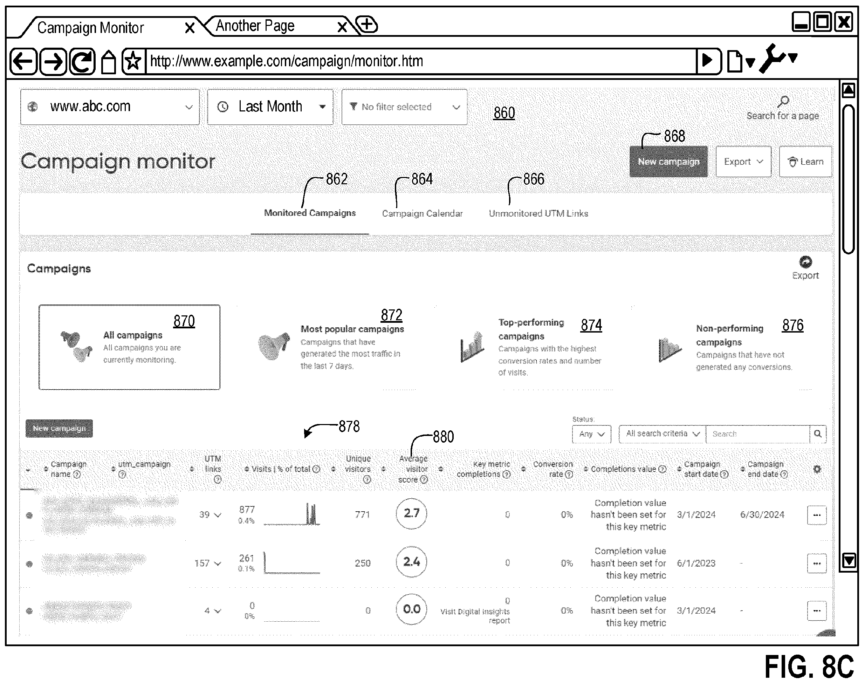

Based on applying the scoring framework to the tracking data received in H1 (146) and/or H2 (148), the engagement scoring system 102 can generate score(s) (block P, 163). For example, the engagement scoring system 102 can identify the triggering events defined by the scoring framework if they appear in the tracking data per session, then assign the corresponding score(s) value to the identified event(s). The engagement scoring system 102 may generate a visitor engagement score value for each identified event in the tracking data per session. The engagement scoring system 102 may generate an aggregate visitor engagement score value for the session based on aggregating or combining (e.g., summating, averaging) the score values that are determined for the identified events. For example, the engagement scoring system 102 can generate an aggregate visitor engagement score for the website. The system 102 may also generate one or more visitor engagement scores for different webpages and/or campaigns associated with the website, as described further in reference to FIGs. 7A, 7B, 8A, 8B, and 8C.

Sometimes, generating the score(s) described herein can include benchmarking or otherwise comparing the score(s) against each other and/or visitor engagement scores for other websites, webpages, and/or site owner websites. As an illustrative example, the score(s) can be compared based on same type of triggered events (e.g., engagement, activity, actions) and/or one or more predetermined criteria (such as criteria identified and/or designated by the site owner).

In some implementations, the score(s) generated in block P (163) can be broken down, such as into subsets. Sometimes, the same scoring framework can be used for all the webpages of the website. Sometimes, multiple different scoring frameworks can be used for the website. Scores generating for the website using the different scoring frameworks can be and compared against each other by the engagement scoring system 102. As an illustrative example, different scoring frameworks can be used for different types of visitors or visitor behaviors, such as recurring visitors, new visitors, etc.

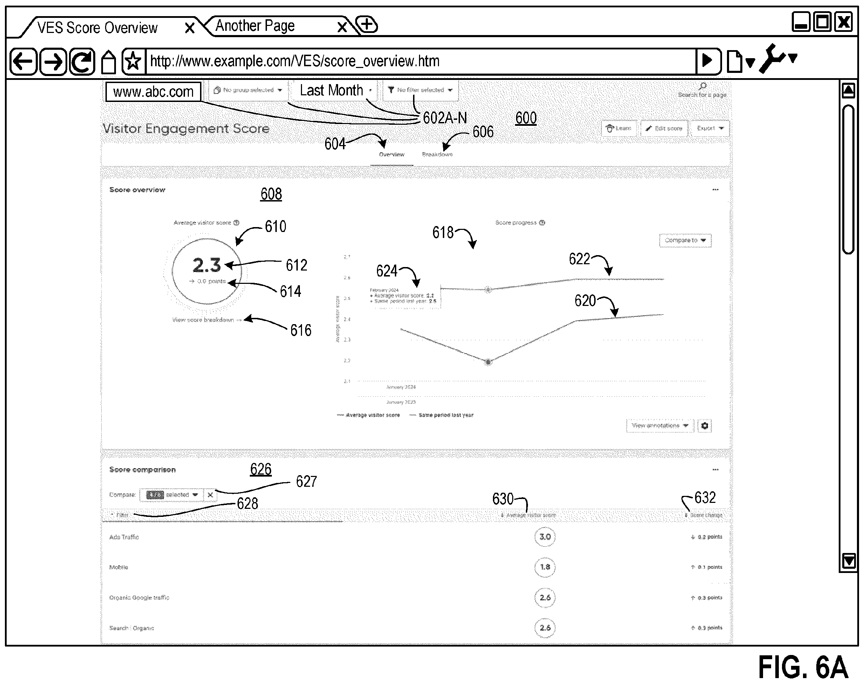

In block Q (164), the engagement scoring system 102 can transmit score(s) data. Transmitting the score(s) data may include transmitting the data to the site owner device 116 for presentation in one or more GUIs. Refer to FIGs. 6A, 6B, 7A, 7B, 8A, 8B, and 8C for further discussion about the GUIs and presenting information related to visitor engagement scoring metrics.

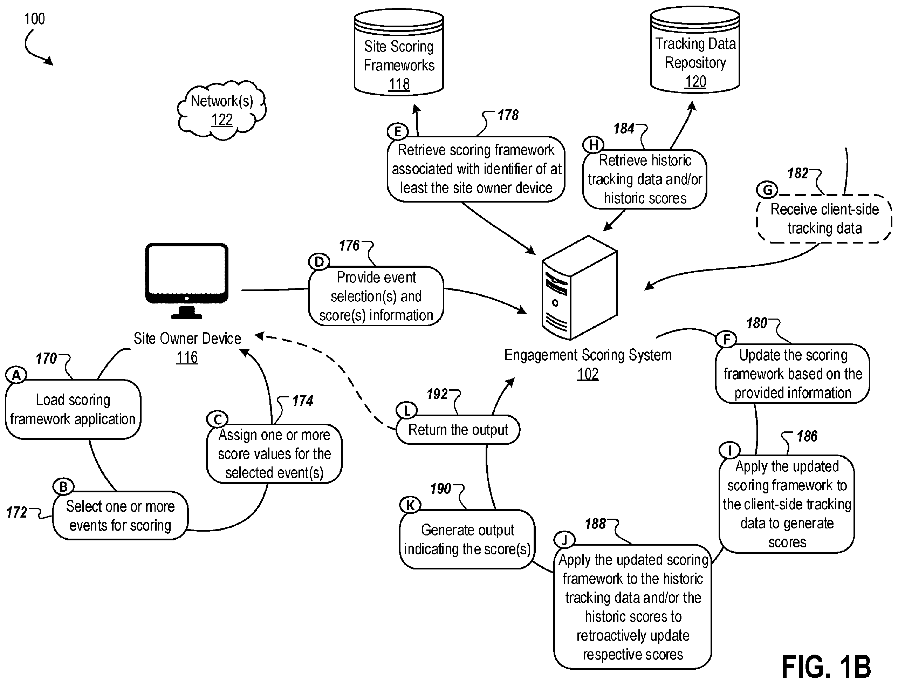

Transmitting the score(s) data may including storing the score(s) data in association with the site owner, the website, and/or the particular page in a data store, such as the site scoring framework data store 118, the tracking data store repository 120, or another data store. Storing the score(s) data can be advantageous to allow for quickly and automatically retroactively updating score(s) for the website and/or the particular page in response to the site owner updating selections of events (block L, 156) and/or assigning score value(s) (block M, 158). Refer to FIG. 1B for further discussion about updating scores retroactively.

In some implementations, one or more of blocks A-Q (130-164) may not be performed in a single process or set of operations. In other words, one or more of the blocks A-Q (130-164) may be performed at different times and/or in different processes. For example, blocks J-O (152-162) (designing a scoring framework) can be performed at a first time and then blocks A-I (130-150) and blocks P-Q (163-164) (tracking data during a session and scoring the tracked data according to the scoring framework) can be performed at a second time. The second time can be after the first time. The second time can be immediately or shortly after the first time. In some implementations, the second time can be any amount of time after the first time, such as whenever a visitor accesses the site owner's website and interacts with the website. Various other combinations of the blocks A-Q (130-164) are also possible.

FIG. 1B is a conceptual diagram of the system 100 for updating historic visitor engagement scores for a website when the website (e.g., site) owner updates a respective scoring framework. The site owner may choose to update the scoring framework at any time. As an illustrative example, the site owner may choose to update the scoring framework once a visitor accesses and interacts with the owner's website, as described in reference to FIG. 1A. Sometimes, the site owner may choose to update or otherwise designate the scoring framework before a visitor access and interacts with the owner's website, such as when the owner builds or modifies the website. The site owner can update the scoring framework by designating one or more new or different events to track for scoring and/or one or more score value(s) assignments for the owner-identified triggering events. Similar to FIG. 1A, the engagement scoring system 102, the site owner device 116, the site scoring frameworks data store 118, and the tracking data repository 120 can communicate with each other via the network(s) 122.

The site owner device 116 can load a scoring framework application in block A (170). Code and/or instructions can be generated at and provided by the engagement scoring system 102 to the site owner device 116 so that the device 116 can load the application in one or more GUI displays. The scoring framework application may indicate different types of events that the engagement scoring system 102 has identified or may identify for the website owner's website. The scoring framework application may also indicate one or more recommended score values and/or ranges for each of the events. Refer to at least FIG. 5 for further discussion about the scoring framework application.

The site owner device 116 can receive user input indicating selection of one or more events in the scoring framework application to be designated as triggering events for scoring (block B, 172). Refer to block K (156) in FIG. 1A and FIG. 5 for further discussion.

The site owner device 116 may also receive user input indicating assignment of one or more score values for the selected event(s) in block C (174). Refer to block M (158) in FIG. 1A and FIG. 5 for further discussion.

In block D (176), the site owner device 116 may provide event selection(s) and/or score(s) information to the engagement scoring system 102. Refer to block N (160) in FIG. 1A for further discussion.

The engagement scoring system 102 can retrieve a scoring framework associated with an identifier of at least the site owner device 116 from the site scoring frameworks data store 118 (block E, 178). The system 102 can use the identifier uniquely associated with the device 116 to retrieve the corresponding scoring framework. In some implementations, the system 102 can use an identifier uniquely associated with the owner's website, a particular webpage of the website, the site owner themselves, or any combination thereof. If a scoring framework does not already exist, then the system 102 may not perform block E (178) and instead may designate a new scoring framework. Refer to block O (162) in FIG. 1A for further discussion.

The engagement scoring system 102 can update the scoring framework based on the provided information in block F (180). Updating the scoring framework can include changing which events are triggering with respect to visitor engagement assessment for the owner's website. Updating the scoring framework can include modifying the score value(s) that are assigned to each of the triggering events detected in tracking data when visitors interact with the owner's website.

Once the scoring framework is updated, the engagement scoring system 102 may store the framework in the site scoring frameworks data store 118 and then the operations described in FIG. 1B may stop. In some implementations, as shown in FIG. 1B, once the framework is updated, the engagement scoring system 102 can retroactively update one or more historic visitor engagement scores for the owner's website, where the historic visitor engagement scores may have been determined using previous versions of the scoring framework. The engagement scoring system 102 may also generate visitor engagement scores using the updated scoring framework for any incoming tracking data.

Accordingly, the engagement scoring system 102 may optionally receive client-side tracking data in block G (182). Refer to at least block H1 (146) in FIG. 1A for further discussion.

The engagement scoring system 102 can retrieve historic tracking data and/or historic scores for the owner's website from the tracking data repository 120 in block H (184).

Next, the engagement scoring system 102 may automatically apply the updated scoring framework to the historic tracking data and/or the historic scores to retroactively update the respective scores (block J, 188) (or determine current/new scores based on the client-side tracking data). The scores may be unbounded numerical and/or integer values. The scores can be automatically computed throughout one or more predetermined historic timeframes and on the fly (such as whenever the site owner updates or otherwise creates the scoring framework).

Applying the updated scoring framework to the historic tracking data can include using the framework to identify the triggering events in the historic tracking data then assigning the designated score values to the identified events. Applying the updated scoring framework to the historic scores may include automatically adjusting the historic scores based on the triggering events and/or designated score values in the framework.

As an illustrative example, a historic visitor engagement score may be determined based on assigning score values to a combination of URL clicks and particular button clicks. The updated scoring framework may now indicate that a visitor engagement score is determined based on assigning score values to only URL clicks. As a result, the historic scores may be updated by retroactively removing the assigned score values to the particular button clicks. The historic scores may reflect only the assigned score values for the URL clicks. As another example, the historic scores may be determined from the historic tracking data by only identifying the URL clicks event data in the historic tracking data and assigning the designated score values to the identified URL clicks event data. Accordingly, and as described herein, actions/events that have been identified for a specific webpage visit (e.g., session) can be stored in a data store so that when a scoring framework is updated and saved, the historic visitor engagement score can be determined for the historic visits as an aggregation of the stored actions/events performed during the visit(s) that qualify in accordance with the scoring framework.

The engagement scoring system 102 can also generate output indicating the score(s) in block K (190). Refer to at least FIGs. 6A, 6B, 7A, 7B, 8A, 8B, and 8C for further discussion. The output can include one or more GUIs described herein, which may provide visual and/or graphical elements to assist the website owner in understanding and analyzing visitor engagement score metrics. For example, the output can include graphical depictions of an aggregate visitor engagement score for the owner's website as it has changed over one or more predetermined periods of time.

The output can be returned in block L (192). Returning the output can include transmitting the output to the site owner device 116 for presentation in the one or more GUI displays at the device 116. Returning the output in block L (192) may additionally or alternatively include storing the output (e.g., the determined score(s)) in the site scoring frameworks data store 118 and/or the tracking data repository 120. Sometimes, one or more of the scores can be generated/updated and then stored, then refreshed or otherwise updated again at later times. Sometimes, the scores may be generated and outputted in the moment (when the scores are generated), but may not be stored long-term. As a result, the scores, or a portion thereof, may be determined automatically, in real-time, or at predetermined time intervals. The scores can be determined whenever the site owner updates the scoring framework. The scores can be determined whenever a visitor access and interacts with the owner's website. The scores may be determined at predetermined time intervals such as once a day, every other day, once a week, etc.

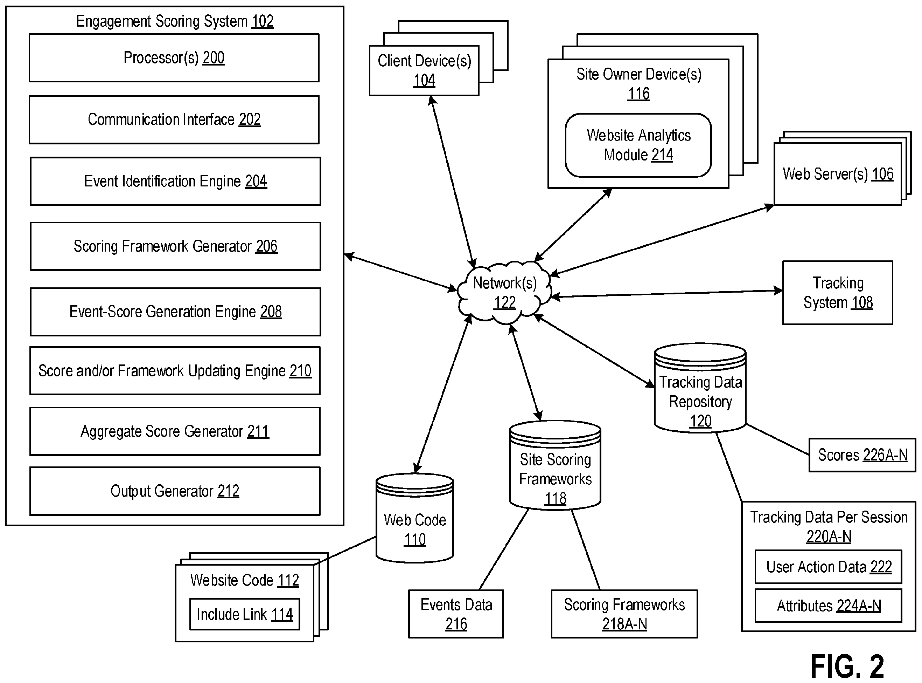

FIG. 2 is a system diagram illustrating one or more system components that can be used to perform the disclosed techniques. As shown and described in FIGs. 1A, 1B, and 2, the engagement scoring system 102, the client device(s) 104, the site owner device(s) 116, the web server(s) 106, the tracking system 108, the tracking data repository 120, the site scoring frameworks data store 118, and the web code data store 110 can communicate (e.g., wired, wirelessly) with each other over the network(s) 122.

The engagement scoring system 102 can include one or more processors 200, a communication interface 202, an event identification engine 204, a scoring framework generator 206, an event-score generation engine 208, a score and/or framework updating engine 210, an aggregate score generator 211, and/or an output generator 212. In brief, the processor(s) 200 can be configured to perform any of the operations described herein. The communication interface 202 can be configured to provide communication between and amongst the components of the engagement scoring system 102 and the other system components shown and described in FIG. 2.

The event identification engine 204 can be configured to identify events in tracking data 220A-N that can be tracked, recorded, or otherwise identified for purposes of scoring a website, as described throughout this disclosure. Sometimes, the engine 204 can receive the tracking data 220A-N directly from the tracking system 108 and/or the web server(s) 106. The tracking data 220A-N may include user action data 222 and/or attributes 224A-N associated with the tracking data 220A-N. Sometimes, the engine 204 can retrieve the tracking data per session 220A-N from the tracking data repository 120. Refer to at least blocks H1 (146), H2 (148), I (150), and J (152) in FIG. 1A for further discussion.

The scoring framework generator 206 can be configured to designate, generate, create, and/or update scoring frameworks 218A-N. The generator 206 can receive event selection and/or score value assignment information from the site owner device(s) 116, which can then be used by the generator 206 to generate a respective scoring framework 218A-N. Sometimes, the generator 206 can retrieve an existing scoring framework 218A-N stored in the site scoring frameworks data store 118, then update the retrieved framework based on the user input from the site owner device(s) 116. Any of the frameworks 218A-N that are designated by the generator 206 may also be stored in the data store 118. Refer at least to blocks K (154), L (156), M (158), N (160), and O (162) in FIG. 1A for further discussion.

The site owner device(s) 116 can launch or otherwise present in one or more GUI displays at the device(s) 116 a website analytics module 214. The module 214 can provide a respective site owner with functionality to create, edit, modify, and/or monitor their website(s), which includes generating the user input indicating the event selection and/or the score value assignment(s) for measuring visitor engagement with their website(s). Refer to at least blocks K (154), L (156), and M (158) in FIG. 1A for further discussion.

The event-score generation engine 208 can be configured to generate scores, such as visitor engagement scores, that correspond to visitor interactions with the site owner's website at the client device(s) 104. For example, the client device(s) 104 can request the website code 112 from the web server(s) 106 for the website associated with the site owner device(s) 116. The web server(s) 106 can retrieve the website code 112 having the include link 114 from the web code data store 110 and transmit the code 112 to the client device(s) 104. The client device(s) 104 can use the website code 112 to launch the website in GUI displays at the client device(s) 104. The include link 114 in the website code 112 can allow for tracking of the visitor interactions (e.g., related to DOM elements of the website) with the website once the website is loaded at the client device(s) 104. The visitor interactions can be packaged up into a per-session log of tracking data, and transmitted to the tracking system 108 and/or the web server(s) 106, which can then provide the tracking data to the engagement scoring system 102. Refer to at least blocks A (130), B (132), C (134), D1 (136), D2 (138), E (140), F (142), G (144), H1 (146), and/or H2 (148) in FIG. 1A for further discussion. The system 102 can store the tracking data as the tracking data per session 220A-N in the tracking data repository 120. Refer to at least block I (150) in FIG. 1A for further discussion.

At the system 102, the event-score generating engine 208 may parse through the tracking data using the scoring framework from the scoring framework generator 206 to identify which events (e.g., visitor interactions) in the tracking data are identified as triggers for scoring. The identified events may be stored as events data 216 in the site scoring frameworks data store 118. Once the engine 208 identifies the triggering events in the tracking data, the engine 208 can assign score values to each of the identified events based on the score value assignments of the scoring framework. The assigned score values can be stored as scores 226A-N in the tracking data repository 120. In some implementations, the scores 226A-N may be stored in the site scoring frameworks data store 118. Refer to at least blocks P (163) and Q (164) in FIG. 1A for further discussion.

The score and/or framework updating engine 210 can be configured to retroactively update and/or generate scores when the scoring frameworks 218A-N are changed/modified. For example, the site owner at the site owner device(s) 116 can provide user input into the website analytics module 214 indicating one or more changes to triggering events and/or score value assignments. This user input can be transmitted to the engagement scoring system 102 and used by the score and/or framework updating engine 210 to update the scoring frameworks 218A-N that correspond to the user input. The engine 210 may also be configured to retrieve, from the tracking data repository 120, the scores 226A-N that have been determined for the website over some predetermined period of time and update the scores 226A-N using the updated scoring frameworks. In some implementations, the engine 210 may retrieve the tracking data per session 220A-N for one or more previous predetermined periods of time, then generate scores for the predetermined periods of time by applying the updated scoring framework(s) to the retrieved data. Any of the updated frameworks and/or scores generated by the engine 210 can be stored as described above. Refer to FIG. 1B for further discussion about operations that can be performed by the score and/or framework updating engine 210.

The aggregate score generator 211 can be configured to aggregate the scores 226A-N that have been determined for a current time period or one or more predetermined periods of time. Aggregating the scores 226A-N can include summating and/or averaging the scores 226AN. The generator 211 can generate a single visitor engagement score for the site owner's website based on aggregating the scores 226A-N for the current time. Aggregating the scores 226A-N may additionally or alternatively include aggregating a portion of the scores 226A-N (e.g., summating, averaging) that correspond to a particular webpage of the website to generate an aggregate visitor engagement score for the particular webpage. The determined aggregate score(s) can be maintained in the tracking data repository 120 as one of the scores 226A-N, in some implementations. Refer to at least FIG. 1A for further discussion about aggregating scores to assess visitor engagement with the site owner's website.

The output generator 212 can be configured to generate one or more GUIs as described herein to be presented by the website analytics module 214 at the site owner device(s) 116. The generator 212 can generate and return GUIs for designating and/or updating the scoring frameworks 218A-N. The generator 212 can generate and return GUIs for presenting visitor engagement metrics, including but not limited to graphical depictions and/or other visual elements illustrating any of the scores 226A-N described herein. Refer to FIGs. 5, 6A, 6B, 7A, 7B, 8A, 8B, and 8C for further discussion.

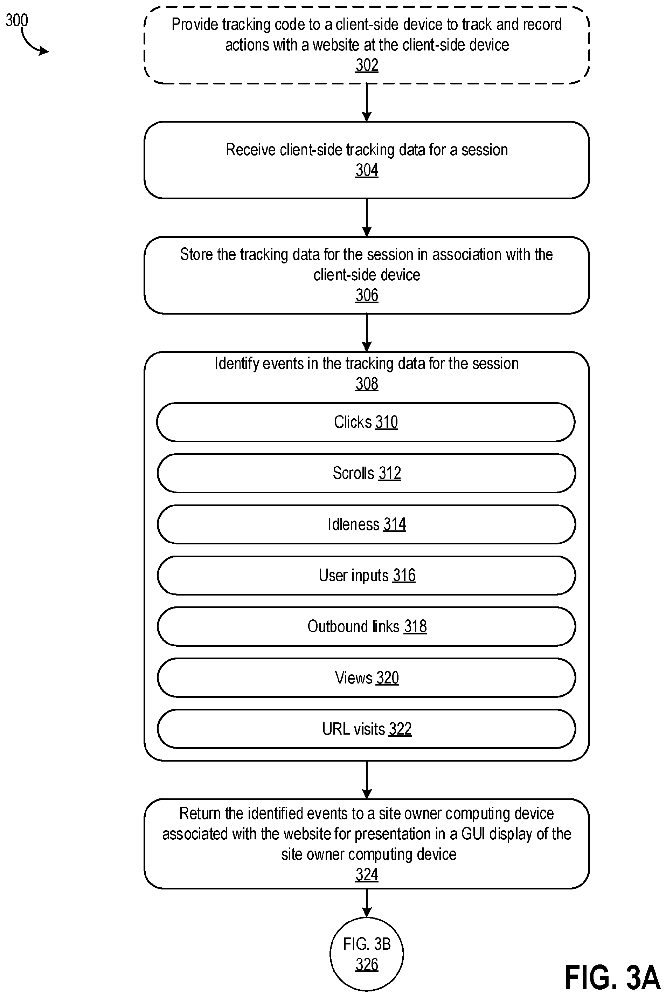

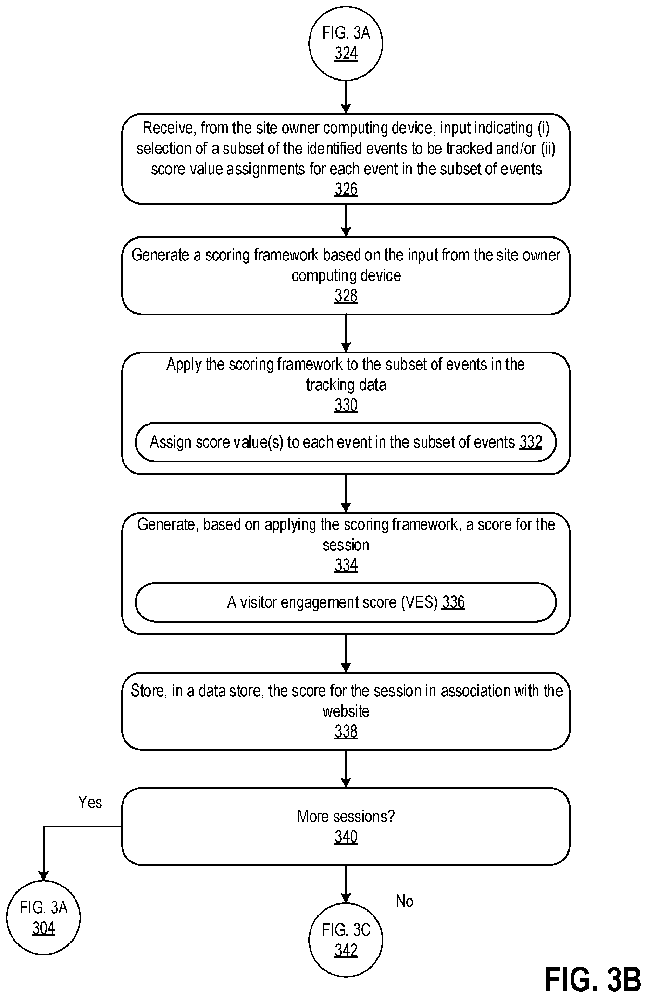

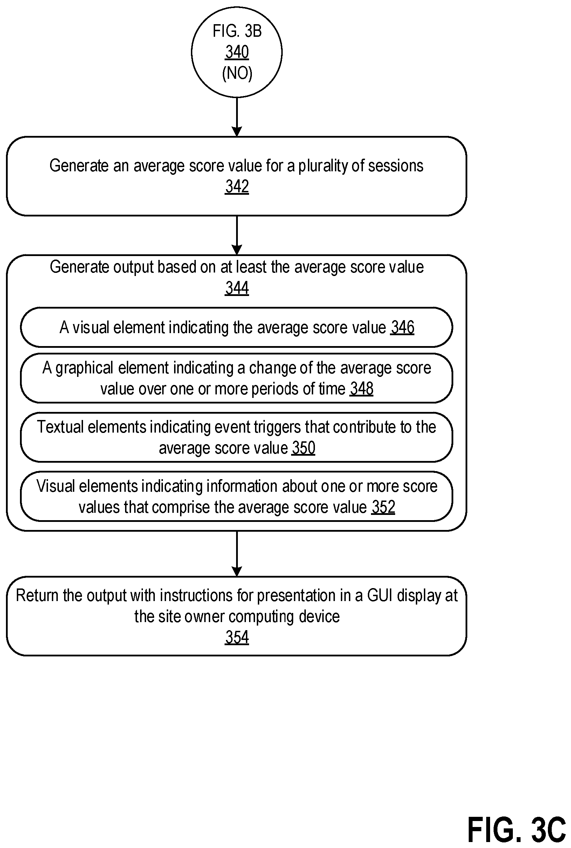

FIGs. 3A, 3B, and 3C illustrate a flowchart of a process 300 for generating a score, such as a visitor engagement score, for a website using a user-defined scoring framework. The process 300 is similar to operations described in reference to FIG. 1A. The process 300 can be performed by the engagement scoring system 102. The process 300 can also be performed by one or more other computing systems, devices, computers, networks, cloud-based systems, and/or cloud-based services. For illustrative purposes, the process 300 is described from the perspective of a computer system.

Referring to the process 300 in FIGs. 3A, 3B, and 3C, the computer system can provide tracking code to a client-side device to track and record actions with a website at the client-side device (block 302). Block 302 may be optionally performed by the computer system. Sometimes, block 302 can be performed by a tracking system, such as a third party tracking and/or analytics system. The computer system may include or otherwise be the same as the tracking system, in some implementations. Refer to at least blocks D1 (136), D2 (138), E (140), and F (142) in FIG. 1A for further discussion.

The computer system can receive client-side tracking data for a session in block 304. The tracking data may indicate actions or events that were recorded as being performed at the client-side device in response to a user interacting with the website. At least a portion of the events can be related to specific DOM elements on the website, as described in reference to FIG. 1A. The tracking data may include click actions, scroll actions, input actions, different types of these actions, idleness, hovering actions, etc. The tracking data may include metadata or other information associated with each of the identified and recorded actions, including but not limited to timestamps.

The tracking data can be transmitted to the computer system once the session with the website is complete. The tracking data can be transmitted to the computer system at predetermined time intervals and/or in batches. In some implementations, the tracking data may be transmitted to the computer system whenever an action is recorded or otherwise performed at the client-side device by the user interacting with the website. Sometimes, the tracking data may first be transmitted to the tracking system, such as the third party tracking system, which may then transmit the tracking data to the computer system. Refer to block G (144) in FIG. 1A for further discussion.

In block 306, the computer system can store the tracking data for the session in association with the client-side device. The tracking data can be stored in a data store, as described in reference to block I (150) in FIG. 1A. The tracking data can be stored in association with an identifier that uniquely identifies the client-side device (e.g., a MAC address, IP address). Additionally or alternatively, the tracking data can be stored in association with an identifier that uniquely identifies the website and/or a site owner (or other relevant user) of the website. The tracking data can be stored in its original format. By storing the tracking data, the computer system may access and retrieve the tracking data for use in re-computing and/or updating visitor engagement scores that have previously been determined for the website using that tracking data. As described herein, the scores can be re-computed and/or updated when the site owner adjusts and/or designates a scoring framework for the website. By storing the tracking data, the computer system may also access and retrieve the tracking data for generating visitor engagement scores for the website over one or more periods of time, including but not limited to a period of time that corresponds to the timestamps of the stored tracking data. Storing the tracking data allows the computer system to quickly and efficiently retrieve the data for use in real-time or near real-time generation of the visitor engagement scores for the website.

The computer system can also identify events in the tracking data for the session in block 308. The computer system can apply one or more rules, techniques, and/or criteria to identify the events. The computer system can identify particular types of events, which may be used for tracking and assessing visitor engagement with the particular website and/or websites more generally. The events may include but are not limited to clicks (block 310), scrolls (block 312), idleness (block 314), user inputs (block 316), outbound links (block 318), views (block 320), and/or URL visits (block 322).

The computer system can identify the events using heat maps, as one example. The heat maps can be used to visualize user interactions, such as dwell time, on a webpage of the website. The heat maps may be generated using the tracking data and can use colors to represent intensity of user interactions. For dwell time, for example, areas of the website where users spend more time, can be depicted in warmer colors (e.g., red, orange), while areas with less dwell time can be represented in cooler colors (e.g., blue, green). Hotspots, or areas in the heat maps having highest concentrations of warm colors, may be identified, and thus indicating high dwell time. The hotspots can provide insight into which parts of the webpage users are engaging the most with.

The computer system can identify other events using different techniques. For example, the tracking system may provide additional analytics, such as session duration. By integrating the tracking code from the tracking system into the loaded website, visitor duration information can be captured and assessed in block 308. As another example, the computer system can calculate visitor duration based on timestamps of page views. When the user visits the webpage, the tracking code can record a time when the user lands on the page and a time when they leave or navigate to another page of the website. By subtracting entry time from exit time, for example, the computer system can determine how long the visitor spent on that specific page. The computer system can sometimes implement session cookies to track the user session. The duration of the user's visit can be measured, for example, by setting a session cookie when the user enters the website and tracking when the cookie is deleted or expires. The computer system can also track events, such as video views, button clicks, link clicks, form submissions, etc., and their associated timestamps to gather insight about the visitor duration. Refer to block J (152) in FIG. 1A for further discussion and about identifying the events from the tracking data.

The computer system can return the identified events to a site owner computing device associated with the website for presentation in a GUI display of the site owner computing device (block 324). Refer to block K (154) in FIG. 1A for further discussion and FIG. 5A for further discussion about the GUI. Sometimes, the computer system may send all the events in the tracking data to the site owner computing device (and sometimes not perform block 308).

In block 326, the computer system can receive, from the site owner computing device, input indicating (i) selection of a subset of the identified events to be tracked and/or (ii) score value assignments for each event in the subset of events. The site owner can select any combination of the identified events for which they want to track and assess visitor engagement with their website, a particular webpage of the website, and/or a set of webpages of the website. In some implementations, the computer system can transmit a recommendation indicating which of the events can or should be selected, which the site owner may accept, reject, or modify.

The site owner can provide input indicating new score value assignments for one or more of the subset of events. The site owner can provide input indicating updated score value assignments for one or more of the subset of events. The GUI at the site owner computing device can include predefined score value ranges for each of the identified events. In some implementations, the ranges can be the same for all of the identified events. In some implementations, the computer system may determine different ranges for one or more of the identified events. For example, the computer system can determine a score range of 1-10 for a particular event that, historically, has provided more insight into visitor engagement than another event. As an illustrative example, for a Contact webpage of the website, the computer system can determine and provide a score range of 1-10 for a form submission event and a score range of 1-5 for an idleness event because submission of a contact form can provide more insight into visitors actively engaging with the website than the visitors loading up the Contact webpage (and perhaps looking for a contact phone number or email address) and not performing additional actions. Refer to blocks L (156) and M (158) in FIG. 1A for further discussion and FIG. 5A for further discussion about the GUI in which the site owner can provide their input.

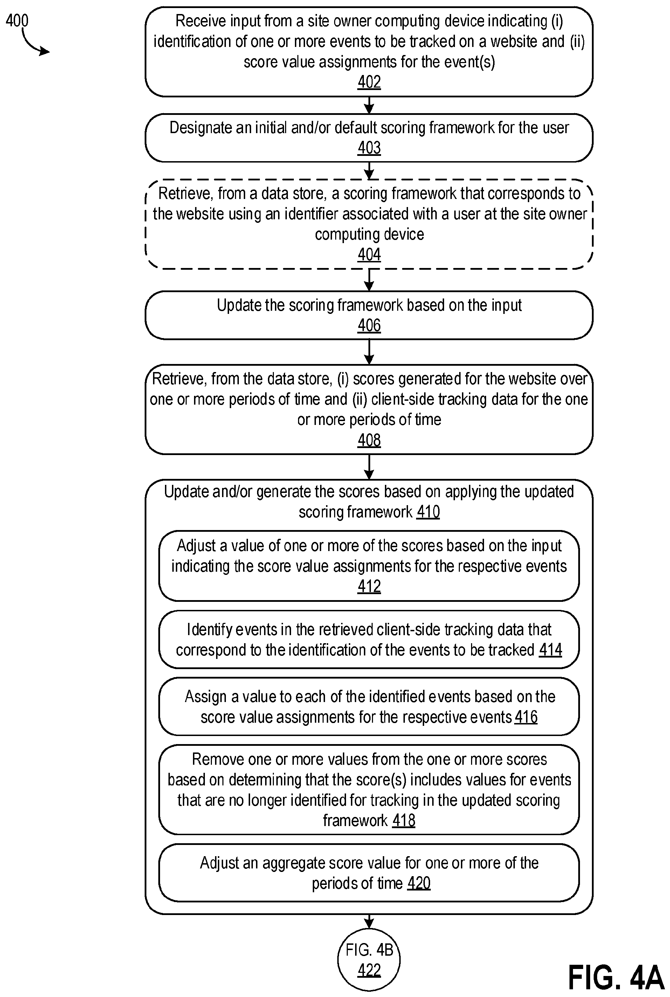

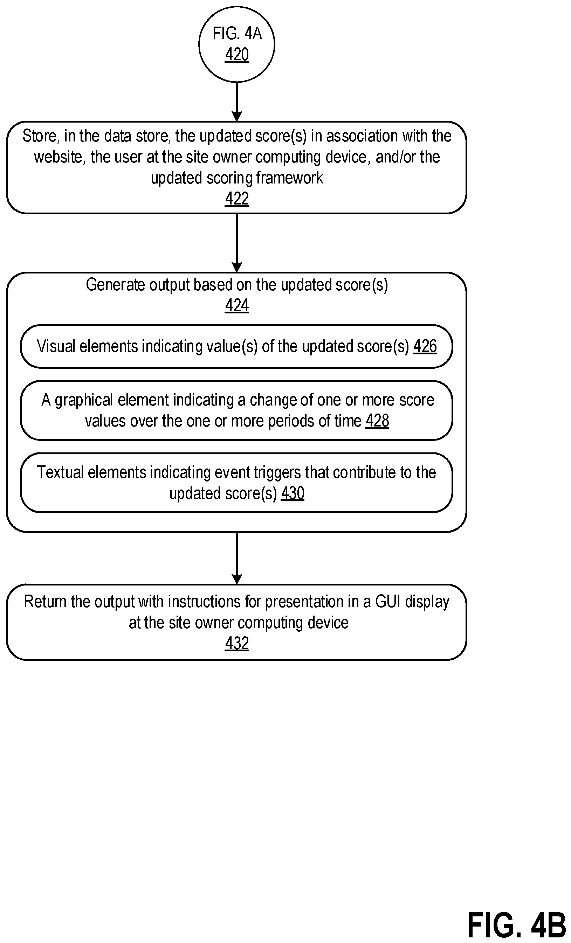

Based on the input from the site owner computing device, the computer system can generate a scoring framework (block 328). Sometimes, generating the scoring framework can include designating a scoring framework. In some implementations, a scoring framework may already be generated/designated in association with the site owner so the computer system can retrieve the scoring framework and update it based on the input. Refer to FIGs. 4A and 4B for further discussion about updating the scoring framework.

When generating or designating the scoring framework, the computer system can associate the framework with an identifier of the website and/or an identifier of the site owner. The computer system may generate a data structure that can map and maintain identification of which events the site owner selected for tracking with how many points can be assigned to each event (such as when that event is identified in the tracking data for the session at the client-side device or other client-side devices). The scoring framework can be stored in a data store, as described herein, and retrieved in real-time or near real-time to be applied to any session tracking data associated with the website. Refer to at least block O (162) in FIG. 1A for further discussion.

In block 330, the computer system can apply the scoring framework to the subset of events in the tracking data (block 330). For example, the computer system can assign score value(s) to each event in the subset of events in block 332. In other words, the computer system can process the tracking data for the session that was received in block 304 to identify whether any events are recorded that correspond to the subset of events identified by the site owner. If any of the subset of events are identified in the tracking data for the session, the computer system can assign its respective score value. The assigned score value(s) can sometimes be stored in a data store described herein in association with the website, the session, and/or a timestamp of the session. Refer to block P (163) in FIG. 1A for further discussion.

In block 334, the computer system can generate, based on applying the scoring framework, a score for the session. For example, the computer system can aggregate (e.g., summate, average, weigh) the assigned score values for the identified subset of events during the one session. For example, the computer system can generate a visitor engagement score (VES), as described herein (block 336). The computer system can aggregate all the scores that were determined/assigned for all the webpages in the website. The computer system can aggregate a subset of the scores that were determined/assigned for the website. For example, the computer system can aggregate the scores for a particular webpage to determine a score, or a visitor engagement score, for the particular webpage of the website. Refer to at least block P (163) for further discussion.

In some implementations, the computer system can perform blocks 330 and 332 at one time and then perform blocks 334 and 336 at another, later time. For example, the computer system can determine and assign scores values to different identified events over time, then store those score values in association with at least the website (blocks 330, 332). In response to the site owner requesting, from the computer system, to view visitor engagement metrics with regard to their website, the computer system can, in real-time or near real-time, retrieve the scores for the identified events and aggregate them to generate a visitor engagement score for the website (block 334 and 336). As a result, the computer system may determine/assign some scores in the background or not in real-time (such as whenever new session tracking data is received) and determine an aggregate score for the website in real-time or near real-time (such as when the site owner requests the visitor engagement metrics).

The computer system can store, in a data store, the score for the session in association with the website (block 338). As described herein, the computer system can store any of the scores determined in blocks 330, 332, 334, and/or 336. As a result, the score(s) can be retrieved at a later time and retroactively updated based on modifications that the site owner may make to the scoring framework. As another example, the score(s) can be retrieved at a later time to generate historic analyses and/or other trends indicating visitor engagement over one or more periods of time.

Sometimes, the process 300 can stop after performing block 338. Sometimes, the process 300 may continue, as described below.

The computer system may determine whether there is tracking data associated with more sessions in block 340. The sessions can be associated with the same client-side device or with other client-side devices. If there are more sessions to assess for visitor engagement, the computer system may return to block 304 to receive the client-side tracking data for the new session(s) and then continue through the process 300 in order to assign one or more scores for the new session. In some implementations, after receiving the client-side tracking data for the new session(s) in block 304, the computer system can proceed to block 330, in which the computer system applies the scoring framework - in other words, the computer system may use the scoring framework that has already been generated instead of prompting the site owner to once again select a subset of events to score and assign corresponding score values.

If the computer system determines there are no more sessions with tracking data to be assessed for visitor engagement, the computer system can proceed to block 342.

In block 342, the computer system can generate an average score value for a plurality of sessions. For example, if the computer system determined an average score value for each session, the computer system may then aggregate (e.g., average, summate, weigh) the average scores values for the plurality of sessions. The average score value can be a numeric value indicating average visitor engagement for the website over a period of time that includes the plurality of sessions.

The computer system can generate output based on at least the average score value in block 344. Refer to FIGs. 6A, 6B, 7A, 7B, 8A, 8B, and 8C for further discussion about the output, which can be presented in one or more GUIs at the site owner computing device.

For example, the computer system can generate a visual element indicating the average score value (block 346). The visual element may include text indicating the average score value. The visual element may include arrows indicating whether the average score value went up or down since a last time that the average score value was determined, requested, and/or updated. The visual element may be a circular shape or object, which can include text or other visual indications of the average score value.

As another example, the computer system can generate a graphical element indicating a change of the average score value over one or more periods of time (block 348). The computer system may generate a line graph depicting the average score value over the one or more periods of time. The one or more periods of time can be selected or otherwise identified by the site owner. In some implementations, the computer system can determine the one or more periods of time, such as a last month, a last 3 quarter, a last 6 months, a last year, etc. In some implementations, the graphical element may also include indications of an expected average score value, a projected score value, and/or other websites' average score values.

As another example, the computer system can generate textual elements indicating event triggers that may contribute to the average score value (block 350). The computer system may generate and provide a filterable table that includes any of the events that were identified in the tracking data according to the subset of events in the scoring framework. The table may also include additional information for each of the identified events, including but not limited to each event's respective score value.

As another example, the computer system can generate visual elements indicating information about one or more score values that comprise the average score value (block 352). The average score value can be made up of many scores values or sub-scores. The computer system can generate circular objects/shapes, graphs, tables, text indications, or other visual elements that can provide information about any one or more of the scores or sub-scores that make up the average score value. As a result, the site owner may gain additional insight into what specific events are more common for visitors at the client-side devices and/or what aspects of their website can be updated to improve visitor engagement.

The computer system can then return the output with instructions for presentation in a GUI display at the site owner computing device (block 354). Refer to at least FIGs. 6A, 6B, 7A, 7B, 8A, 8B, and 8C for further discussion.

In some implementations, blocks 330-354 may be performed in a process separate from blocks 324-328. For example, in one process, the computer system can render the website to identify the events that can be identified for tracking (block 324). The computer system can then provide information about those events to the site owner computing device to provide input indicating which events should be triggers for assessing visitor engagement with the website and how many points to assign to each of those events (block 326). The computer system can generate/designate the scoring framework based on the user input. In a separate process (such as a process that occurs at a later time or during real-time or near real-time), the computer system can receive tracking data whenever a visitor engages with the website at their client-side device (block 306). The computer system may then perform operations such as applying the framework to the tracking data (block 330) and generating the visitor engagement score(s) for the session associated with the tracking data (block 334). In yet some implementations, the computer system can generate an average score value for the plurality of sessions (or otherwise the website as a whole) (block 342) in a separate process. The process of generating the average score value for the plurality of sessions may occur at a later time, such as during real-time or near real-time, whereas the scores determined per session may not be performed in real-time.

FIGs. 4A and 4B illustrate a flowchart of a process 400 for designating a scoring framework and retroactively adjusting scores, such as visitor engagement scores, that have been determined for a website using the scoring framework. The process 400 is similar to operations performed and described in reference to FIG. 1B. The process 400 can be performed by the engagement scoring system 102. The process 400 can also be performed by one or more other computing systems, devices, computers, networks, cloud-based systems, and/or cloud-based services. For illustrative purposes, the process 400 is described from the perspective of a computer system.

Referring to the process 400 in FIGs. 4A and 4B, the computer system can receive input from a site owner computing device indicating (i) identification of one or more events to be tracked on a website and (ii) score value assignments for the event(s) (block 402). As described herein, the site owner computing device can launch a service or application for web content analysis, which can be provided by the computer system. A user at the computing device can navigate through GUIs of the service or application to a page having selectable features for creating, adjusting, modifying, and/or designating a scoring framework used for assessing the user's website(s) according to visitor engagement metrics. In that page, the user can provide one or more of the input described herein in block 402. Refer to blocks L (156) and M (158) in FIG. 1A for further discussion about the user input. Refer to FIG. 5 for further discussion about the page (e.g., GUI) for providing the user input.

The computer system may designate an initial and/or default scoring framework for the user in block 403. The computer system may search a data repository with an identifier that uniquely identifies the user, the site owner computing device, and/or a website of the user to determine whether a scoring framework already exists in association with the identifier. If the scoring framework already exists, then the computer system can retrieve it. Refer to block 404. If the scoring framework does not already exist, then the computer system may generate/designate the scoring framework using the user input provided in block 402 and the identifier. Designating the framework may include generating a data mapping indicating which website and/or webpages of the website are to be assessed for visitor engagement according to the framework. The data mapping may also indicate which events are identified as triggering events for purposes of scoring and visitor engagement assessment. The data mapping may also indicate score values to be assigned to each instance of the triggering events if and when those triggering events are identified in session tracking data from client computing devices that are accessing and interacting with the website.

In block 404, the computer system may optionally retrieve, from a data store, a scoring framework that corresponds to the website using an identifier associated with a user (e.g., site owner) at the site owner computing device. Refer above to block 403 for further discussion of retrieving the scoring framework.

The computer system may update the scoring framework based on the input in block 406. When the computer system generate a new scoring framework, the computer system can generate the data mapping as described above and thus assign the score values to the identified triggering events for a first time. When the computer system retrieves an existing framework and updates the framework based on the user input, the computer system may remove one or more triggering events from the framework (if the user input indicates deselection or deletion of one or more existing triggering events in block 402). The computer system can add one or more triggering events to the framework. The computer system can adjust one or more parameters of the triggering events in the framework (see FIG. 5 for further discussion). The computer system can update or change one or more of the assigned score values based on the user input for existing triggering events and/or new triggering events in the framework. Once the scoring framework is updated, the computer system may store the framework in association with the identifier in the data store.

In block 408, the computer system can retrieve, from the data store, (i) scores generated for the website over one or more periods of time and/or (ii) client-side tracking data for the one or more periods of time. The computer system may use the identifier described herein to identify and retrieve (i) and/or (ii) from the data store. The one or more periods of time may be defined by the user at the site owner computing device. The one or more periods of time can be predetermined by the computer system. The one or more periods of time may correspond to historic time periods, such as a past week, 1 month, 2 months, quarter, 6 months, year, etc.

Sometimes, the user at the site owner computing device can dynamically request updated historic analysis of the visitor engagement for their website. When such a request is made, the computer system can perform block 408 in real-time to provide real-time or near real-time information to the user.

The computer system may update and/or generate the scores based on applying the updated scoring framework in block 410. For example, the computer system can adjust a value of one or more of the scores based on the input indicating the score value assignments for the respective events (block 412). If the triggering event was previously identified in the scoring framework but the user provided input to change or update the score value assignment for that event in block 402, the score value assignment can be respectively updated in the framework in block 412.

As another example, the computer system can identify events in the retrieved client-side tracking data that correspond to the identification of the events to be tracked (block 414). In other words, the computer system may retroactively determine/generate scores for the identified events in the retrieved client-side tracking data over the one or more periods of time (instead of retrieving scores that had been previously determined for that tracking data and then updating those scores).

The computer system can then assign a value to each of the identified events based on the score value assignments for the respective events in the retrieved client-side tracking data (block 416).

As another example, the computer system may remove one or more values from the one or more scores based on determining that the score(s) includes values for events that are no longer identified for tracking in the updated scoring framework (block 418). Instead of re-computing score values, the computer system may simply remove (e.g., subtract) score values that had been determined using a previous scoring framework and that no longer appear in the updated scoring framework.

As yet another example, the computer system may adjust an aggregate score value for one or more of the periods of time (block 420). Adjusting the aggregate score value can be based on adding or removing score values for events that had been identified over the one or more period of time using previous scoring frameworks (and no longer are identified in the updated scoring framework) and/or events that are identified using the updated scoring framework. As described herein, the aggregate score value can be updated dynamically and/or in real-time or near real-time. The aggregate score value can be retroactively updated whenever the user adjusts the scoring framework, thereby providing the user with an accurate assessment of visitor engagement for their website based on events of particular interest to the user.

Once the score(s) is updated, the computer system may store, in the data store, the updated score(s) in association with the website, the user at the site owner computing device, and/or the updated scoring framework (block 422). For example, the computer system may store the updated aggregate score value. The computer system may store one or more of the updated score values for events that were identified and scored using the updated scoring framework. Sometimes, one or more of the updated scoring framework, the aggregate score value, and/or the other scores may be stored locally, such as in cache, to allow for fast and efficient calculation of score values and/or presentation of the score values to the user at the site owner computing device.

The computer system can generate output based on the updated score(s) in block 424. For example, the computer system can generate visual elements indicating value(s) of the updated score(s) (block 426). As another example, the computer system can generate a graphical element indicating a change of one or more score values over the one or more periods of time (block 428). Additionally or alternatively, the computer system may generate textual elements indicating event triggers that contribute to the updated score(s) (block 430). Refer to FIGs. 6A, 6B, 7A, 7B, 8A, 8B, and 8C for further discussion about the outputs that may be generated by the computer system.

The computer system can then return the output with instructions for presentation in a GUI display at the site owner computing device (block 432).

FIG. 5 illustrates an example GUI 500 for designating a scoring framework for a website. The GUI 500 can be accessed/presented at the site owner computing device 116 described throughout this disclosure. The GUI 500 can be provided to the site owner computing device 116 by the engagement scoring system 102 of FIG. 1A as part of a platform for assessing, analyzing, and/or modifying the website of a user associated with the site owner computing device 116.

The example GUI 500 includes triggers or events 502A-N, which may be identified in client-side session tracking data for visitor engagement assessment. Each of the events 502A-N can be user-configurable and selectable for purposes of scoring visitor engagement with the website. As described herein, one or more of the events 502A-N can be designated and assigned a predetermined amount of points in a scoring framework for a webpage or website. Whenever those events 502A-N are identified in the client-side tracking data, the corresponding points can be allocated for computing a visitor engagement score for the webpage (or website). The GUI 500 may include a selectable option 508 for selecting a website for which to create and/or modify a respective scoring framework. In some implementations, the option 508 can be a dropdown menu listing websites that are associated with the user of the site owner computing device 116.

In the example of the GUI 500, the events 502A, 502B, and 502C are identified as suggested triggers for the user-selected website. Each of the suggested events 502A, 502B, and 502C can include respective toggles 512A, 512B, and 512C, which can be selected by the user to designate whether or not that event(s) should be used for the scoring framework. Here, the user has selected the events 502A (all page views trigger/event) and 502C (all document views trigger/event) to be part of their scoring framework for the website designated by the option 508. The user can also provide user input to adjust the point allocations for any one or more of the suggested events 502A, 502B, and 502C.

In the GUI 500, the events 502D and 502N are listed as custom triggers/events, which means the user can create, modify, or otherwise customize these events and other events. For example, the user can select option 510 to add a new custom trigger/event. The user can also select or deselect one or more of the events 502A-N in the GUI 500. Selecting an event 502A-N indicates that the user wants to track and allocate points the identifying the selected event 502AN to score visitor engagement with their website. Deselecting or not selecting one or more of the events 502A-N indicates that the user does not want to track and allocate points for those events 502A-N.

The user may provide one or more inputs for the events 502D-N to customize how each of the events 502D-N may be identified and/or allocated points. As merely illustrative examples, the user can select a page view event 502N to receive a score value of 1 if a URL starts with "/products/." As other illustrative examples, the user may select or create/add an outbound link event to receive a score value of 3 if a URL contains "social_media." As another example, the user can select another page view event to receive a score value of 1 if a URL simply contains "/." The user can select or otherwise created an event to receive a score value of 5 if a category contains a video, an action contains a play action, and a label includes any label. The user may select or otherwise create another event to receive a score value of 8 if the category is any category, the action contains checking the website, and the label contains any type of label. Any one or more other types of events can be selected and/or created/added in the GUI 500.

Once the user designates and/or selects the triggers/events 502A-N, their characteristics/parameters, and/or their respective score values, the user can select options 504 and/or 506. The options 504 and 506 may be selectable buttons. Selecting the option 504 can allow the user to apply the changes/inputs provided in the GUI 500 to more than one website (such as multiple websites that may be provided by the selectable option 508). Selecting the option 506 allows the user to apply the changes/inputs provided in the GUI 500 to only a particular website that was selected using the option 508 (in this example, the website is www.abc.com). Once the user selects the option 504 or 506, the engagement scoring system 102 can receive the user input from the site owner computing device 116, designate a scoring framework for the user's website(s). The engagement scoring system 102 can apply this framework to current and future visitor sessions with the website(s). The engagement scoring system 102 may also retroactively apply the framework to tracking data for previous visitor sessions with the website(s) to score the website(s) over one or more periods of time (e.g., historic, present, and/or future periods of time). Refer to at least the process 400 in FIGs. 4A and 4B for further discussion about designating the using the scoring framework.

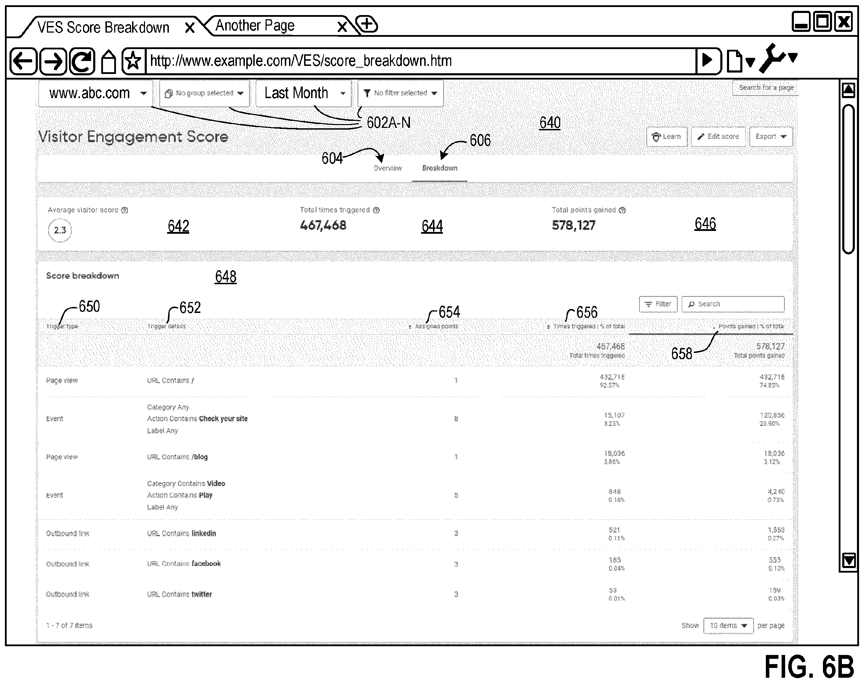

FIGs. 6A and 6B illustrate example GUIs 600 and 640 for viewing visitor engagement score metrics for a website. The GUIs 600 and 640 can be accessed/presented at the site owner computing device 116 described throughout this disclosure. The GUIs 600 and 640 can be provided to the site owner computing device 116 by the engagement scoring system 102 of FIG. 1A as part of a platform for assessing, analyzing, and/or modifying the website of a user associated with the site owner computing device 116.

Referring to the GUI 600 in FIG. 6A, a user at the site owner computing device 116 can provide input at one or more selectable options 602A-N to identify a website for which to view visitor engagement metrics. For example, using the options 602A-N (which may include input search fields, dropdown menus, radio buttons, etc.), the user can identify a particular website (e.g., "www.abc.com"), a particular group of pages to assess (the user can also indicate that no group is selected, which means all pages of the particular website may be assessed), a time period (such as last month, or any previous period of time that may be defined by the user, including but not limited to a present/current period of time and/or one or more future periods of time), and/or one or more filters to apply. The filters can include visitor segments, such as visitors from mobile devices, visitors from different geographic locations, visitors from different social media channels, etc.

The GUI 600 may also include options 604 and 606, which can be selected to toggle between the GUI 600 and the GUI 640 described further in FIG. 6B. The option 604 can be selected to view the GUI 600, which presents an overview of a visitor engagement score for the user-selected website. The option 606 can be selected to toggle to the GUI 640 in FIG. 6B, which can present a breakdown of the visitor engagement score for the user-selected website.

The GUI 600 also includes a score overview portion 608 and a score comparison portion 626. The score overview portion 608 may include a visual element 610 indicating an average (e.g., aggregate) visitor engagement score for the user-selected website. The visual element 610 may additionally or alternatively include a numerical indication 612 of the average visitor engagement score and/or a text indication 614 of whether and/or how much the average score has changed. In the illustrative example of FIG. 6A, the average score for the particular website is 2.3 (on a predetermined scale, such as on a scale of 0 to 10) and the average score has maintained the same over some predetermined period of time. The score overview portion 608 may also include a selectable link 616, which, when selected, can present additional information about the score breakdown. Selecting the link 616 can cause the GUI 640 of FIG. 6B to be presented at the site owner computing device 116. Additionally or alternatively, selecting the link 616 can cause a pop-out window to be presented as at least partially overlaying the GUI 600 of FIG. 6A. The pop-out window may include at least a portion of the score breakdown information depicted and described in reference to the GUI 640 in FIG. 6B.

The score overview portion 608 of the GUI 600 may also include a graphical element 618 (e.g., a line graph), which can visually depict progress of the average score for the particular website over one or more periods of time. The user can provide input in the GUI 600 indicating the period(s) of time of interest to be shown by the graphical element 618. Sometimes, the engagement scoring system 102 can generate the graphical element 618 on a daily basis, an hourly basis, or any other trend(s) that is relevant to the particular user (and/or defined by input from the user).

The graphical element 618 can include a current average score line 620 and a historic average score line 622. The current average score line 620 can indicate how the current average score has changed over some predetermined period of time, such as a current month. The historic average score line 622 can indicate how the average score changed over the same period of time during a previous year. As a result, the graphical element 618 can provide a visual comparison of the average score as it changes over time for the website, making it easier for the user to understand how and why visitors may engage more or less with their website. The user may hover over either of the lines 620 and 622 to view a pop-out window 624, which may partially overlay a portion of the graphical element 618.

The pop-out window 624 may include additional information about a location/portion of the line 620 and/or 622 where the user is hovering (e.g., with their mouse). For example, the pop-out window 624 can include information such as a time period that corresponds to the location of the line 620 and/or 622 where the user is hovering, an average visitor score at that time period, and/or an average score at that same time period in a year prior. In the example of FIG. 6A, the user hovers over a portion of the line 622, which causes the pop-out window 624 to present information indicating that during February, 2024, the average visitor score is 2.2 and at the same time period last year (e.g., February, 2023), the average visitor score is 2.5. Here, the user can more easily see that the year prior at the same time, the website was experiencing more visitor engagement than the current period of time. This can cause the user to perform additional analysis and/or use additional services provided by the engagement scoring system 102 to determine what changes to the website (or lack of changes) caused the average score to drop during the current time period.

Still referring to FIG. 6A, the score comparison table 626 in the GUI 600 can be used by the user to select and compare different aspects of their website based on the respective average score values. For example, the user can provide input in option 627 (e.g., a selectable dropdown menu) to identify which and/or how many triggering events to present and compare in the table 626. Here, the user has selected to view and compare 4 of 6 triggering events in the table 626. The table 626 can include columns 628, 630, and 632 with information associated with the events that the user selected in the option 627. The column 628 can be sorted/filtered based on the user-selected events. Here, the column 628 includes rows for events including but not limited to Ads Traffic, Mobile, Organic GOOGLE Traffic, and Search/Organic. The column 630 can be sorted and can indicate an average score for each of the events in the column 628. The column 632 can be sorted and can indicate a score change for each of the events in the column 628. Various other information can be presented and/or sorted in the table 626.

The GUI 640 in FIG. 6B illustrates a breakdown of a visitor engagement score as presented in the GUI 600 of FIG. 6A. The visitor engagement score can be broken down on a page level. The score can additionally or alternatively be broken down based on one or more trigger types and/or trigger events that have been previously defined by the user at the site owner computing device 116 (refer to at least FIG. 5 for further discussion), etc. As another example, the score can be broken down based on mobile and/or desktop views.

Similar to the GUI 600 in FIG. 6A, the GUI 640 can include the selectable options 602A-N. The GUI 640 can also include the options 604 and 606 described in reference to FIG. 6A. As shown in FIG. 6B, the GUI 640 can include an average score indication 642, a total times triggered indication 644, and a total points gained indication 646. The total points gained indication 646 can indicate an aggregated number for all times that a particular triggering event (or a group of triggering events) has been activated by a visitor multiplied by respective points assigned to the particular triggering event. The average score indication 642 can indicate, as an illustrative example, the total points gained divided by the total number of visits. Accordingly, the average score can be a relative value between the engagement that has occurred and the amount of visitors to the website/webpage during a particular period of time.

The GUI 640 of FIG. 6B also may include a score breakdown table 648, which can indicate additional details about each of the trigger types and/or trigger events that the user had previously identified. For example, the table 648 can include a trigger type column 650, a trigger details column 652, an assigned points column 654, a times triggered/% of total column 656, and a points gained/% of total column 658. The trigger type column 650 can indicate each trigger event that the user identified and/or defined in the GUI 500 of FIG. 5. The trigger details column 652 can include one or more of characteristics/parameters that the user defined for each respective trigger event of the column 650 using the features of the GUI 500 in FIG. 5. The assigned points column 654 can indicate how many points were assigned for each of the trigger events in the column 650 for the user's website. Sometimes, the column 654 can be sorted by the user (e.g., from greatest to smallest amount of points assigned, vice versa). The column 656 can indicate how many times each event in the column 650 was triggered, or a % of total times that all the events were triggered during assessment of the website. The column 656 may also be sorted by the user (e.g., from greatest to smallest amount of times triggered, vice versa). The column 658 can indicate how many points were gained, or a % of total points gained, for each event in the column 650. The column 658 can also be sorted by the user (e.g., from greatest to smallest amount of points gained, vice versa). Various other information may also be included in the table 648. The information presented in the table 648 can be used by the user to easily and quickly understand what aspects/events associated with their website are causing more or less visitor engagement. Using this information, the user can determine how to improve their website and overall visitor engagement with the website.

FIGs. 7A and 7B illustrate an example GUI 700 for viewing visitor engagement scoring metrics for a page (e.g., webpage) of a website. The GUI 700 can be accessed/presented at the site owner computing device 116 described throughout this disclosure. The GUI 700 can be provided to the site owner computing device 116 by the engagement scoring system 102 of FIG. 1A as part of a platform for assessing, analyzing, and/or modifying the website of a user associated with the site owner computing device 116. Referring to both FIGs. 7A and 7B, the GUI 70 can include options 704 and 706 to toggle between viewing an overview of an average visitor score for the particular page of the website and a score breakdown for the particular page of the website. The options 704 and 706 can be similar to the options 604 and 606 described further in reference to FIGs. 6A and 6B. The GUI 700 can include information corresponding to the score overview (option 704). Although not depicted, selecting the option 706 can cause a GUI similar to the GUI 640 of FIG. 6B to be presented with score breakdown information for the particular page of the website.

In the example GUI 700 of FIGs. 7A and 7B, the GUI 700 includes a score overview portion 708 and a score breakdown table 720. The score overview portion 708 is similar to the score overview portion 608 of the GUI 600 in FIG. 6A. Refer to FIG. 6A for further discussion about components of the score overview portion 708. In brief, the score overview portion 708 may include a visual element 710 indicating the average visitor score for the particular page, a numerical indication 712 of the average visitor score, a textual indication 714 of a change in the average score, and a selectable link 716 to view additional information about the score breakdown. The score overview portion 708 may also include a graphical element 718 illustrating how the average visitor score has changed over one or more periods of time. The user can provide user input to adjust the one or more periods of time for viewing the average visitor score. The user may also provide input to indicate what time periods they desire to compare the average visitor score against. The user may additionally or alternatively provide input to indicate what pages of the website or which to compare average visitor scores.

The GUI 700 can also include the score breakdown table 720, which is similar to the score breakdown table 648 of the GUI 640 in FIG. 6B. In brief, the table 720 can include, as an example, a trigger type column 722, a trigger details column 724, an assigned points column 726, a times triggered column 728, and/or a points gained column 730. Refer to FIG. 6B for further discussion about the table 720 and components of the table 720.

FIGs. 8A and 8B illustrate a GUI 800 and FIG. 8C illustrates a GUI 860 for viewing campaign metrics for a website. The GUIs 800 and 860 can be accessed/presented at the site owner computing device 116 described throughout this disclosure. The GUIs 800 and 860 can be provided to the site owner computing device 116 by the engagement scoring system 102 of FIG. 1A as part of a platform for assessing, analyzing, and/or modifying the website of a user associated with the site owner computing device 116.

Referring to both FIGs. 8A and 8B, webpage visits belonging to a specific campaign can have a same campaign URCHIN Tracking Module (UTM) value, or other parameters appended to links used in campaign activities to pass along information, directly in a URL, to an analytics system or tool. For a group of visits belonging to a campaign, an average visitor engagement score can be determined and displayed for those visits using the disclosed techniques.

The GUI 800 of FIGs. 8A and 8B illustrates a campaign details page for a particular website. The GUI 800 includes selectable options 802A-N, similar to the selectable options 602A-N described in reference to at least FIG. 6A. The GUI 800 also includes options 804 and 806 to toggle between presenting the campaign details in the GUI 800 and presenting UTM links 806 in the GUI 800, in a pop-out window overlaying a portion of the GUI 800, and/or in another GUI (not depicted). In the GUI 800, the option 804 has been selected to display the campaign details for the user-selected website, www.abc.com. The GUI 800 further may include a button 808, which can be selected to view another GUI in which the user can edit or modify settings or other information about the particular campaign associated with the user-selected website.

The GUI 800 can include one or more widgets 810, 812, 814, 816, 818, 820, and/or 838. The widget 810 can indicate a focus key metric, which may be selected by the user from a dropdown menu and/or list, to analyze a campaign's traffic against a defined goal of the website (e.g., newsletter signups, purchases). The widget 812 can indicate a budget that has been (or has not been) set by the user, which can indicate an assigned economical cost metric to a monitored campaign. The widget 814 can indicate a date at which the campaign presented in the GUI 800 began/started. The widget 816 can indicate a date at which the campaign is set to end (if an end date has been set). The widget 818 can indicate whether and/or when the campaign was last updated, modified, or otherwise edited.

The widget 820 can provide metrics and/or other relevant information associated with the visitor engagement score for webpages associated with the particular campaign. The widget 820 can present information such as an average visitor engagement score determined for all the campaign traffic using the disclosed techniques. For example, the widget 820 may include, but is not limited to, visits information 822, unique visitors information 824, page views information 826, page views per visit information 828, new visitors versus returning visitors information 830, average time on the website information 832, average visitor score information 834, and/or bounce rate information 836.

In brief, the visits information 822 can indicate how many visits occurred for webpages associated with the particular campaign for a period of time that the user defined using the selectable options 802A-N. In this example of the GUI 800, 877 visits occurred over a previous month for the webpages associated with the particular campaign. The unique visitors information 824 can indicate how many unique visitors visited the webpages associated with the campaign over the defined period of time. Here, the webpages associated with the campaign received 771 unique visitors over the past month. The page views information 826 can indicate how many views occurred for the webpages associated with the campaign over the period of time. Here, 2,265 page views occurred during the past month. The visits information 822, the unique visitors information 824, and/or the page views information 826 may present the relevant information using graphical elements (e.g., a line graph) and/or text. Various other visual elements may be used to display the information 822, 824, and/or 826.

The page views per visit information 828 can be a numeric value indicating how many page views occurred per every visit for the webpages associated with the campaign. In some implementations, the engagement scoring system 102 described herein can compute the information 828 by dividing the page views information 826 by the visits information 822. The engagement scoring system 102 can also compute the information 828 using one or more other techniques to numerically represent a relationship between the page views and the number of visits over the defined period of time. In some implementations, the information 828 can include a graphical or other visual element to indicate the page views per visit and/or how the page views per visit value has changed over one or more periods of time. In the illustrative example of the GUI 800, the page views per visit information 828 includes a green arrow and an indicator of how much the page views per visit has increased since a last time this value was computed (e.g., 2 months ago).

The new visitors versus returning visitors information 830 can illustrate a comparison of new visitors to old/returning visitors for the webpages associated with the campaign. The information 830 can illustrate this metric using text and/or numeric values. The information 830 can illustrate this metric using graphical and/or visual elements, such as a bar graph. In the illustrative example of the GUI 800, the information 830 indicates that 77% of all visitors during the past month were new visitors and 23% of all the visitors were returning visitors. The information 830 also visually indicates this metric using a bar graph.

The average time on the website information 832 can be determined by the engagement scoring system 102 based on timestamps collected from visitors that access the webpages at their client devices. The engagement scoring system 102 can determine the average time based on summating all the timestamps for the visitor sessions with the website and/or particular webpage(s) then dividing by the total number of sessions, timestamps, and/or visitors. The engagement scoring system 102 can use one or more other techniques to determine the average time spent on the website and/or the webpages associated with the campaign. The information 832 can present the average time as a time indication and/or with one or more graphical or visual elements that indicate the average time. The graphical or visual elements may additionally or alternatively indicate how much the average time over the defined period of time has increased or decreased relative to one or more other periods of time.

The average visitor score information 834 can indicate an average score that was determined for the webpages associated with the campaign over the defined period of time. The average score can be determined using the disclosed techniques. The information 834 can present the average score as a numeric or text value. In some implementations, the average score can be presented as a graphical element, such as a circle, depicted and described throughout this document. Sometimes, the information 834 may also indicate how much the score has increased or decreased since a last time at which the average score was determined/presented in the GUI 800.

The bounce rate information 836 can indicate a bounce rate (e.g., as a percent value) for the webpages associated with the campaign over the defined period of time. The bounce rate may indicate a percentage of the visitors to the website (or the particular webpages) that navigate away from the website after viewing only one page. The information 836 can present the bounce rate as a text and/or numeric value. The information 836 can additionally or alternatively present information indicating how much the bounce rate has increased or decreased since the last time the bounce rate was determined and/or presented in the GUI 800.

The widget 838 can indicate a return on investment for the particular campaign. Information determined and presented in the widget 838 may include, but is not limited to, key metric completions, conversion rate, budget spent, cost per completion, return on investment (ROI), completion value, etc.

In some implementations, the GUI 800 may also present a campaign performance graph 840. The graph 840 may visually present one or more metrics associated with the campaign performance over a predetermined period of time (e.g., a past year, a past 6 months, a past 3 months, a past 1 month). As an illustrative example, the graph 840 can present a number of visitors metric, a conversion rate metric, and/or a key metric completion metric in order to provide the user with a visual understanding of how the campaign has performed over the predetermined period of time. The user can toggle and select which of the metrics to be presented in the graph 840. When the user selects or deselects a metric to be presented in the graph 840, the graph 840 can be automatically and dynamically updated in real-time to reflect the user's selection/deselection.

The GUI 800 may also include a traffic segments table 842. The table 842 can present information such as the visitor engagement score according to a view 843A-N that the user selects. In some implementations, all visitor engagement scores can be automatically shown for all campaigns. The illustrative views 843A-N may include, but are not limited to, source/medium, source, medium, term, content, UTM links, and/or landing pages. In the example table 842, the user has selected the source/medium view 834A-N. As a result, the table 842 displays visitor engagement metrics and information for UTM sources with respect to the source/medium view.

The table 842 can include information such as visits information 846, unique visitors information 848, average visitor score information 844, average time on website information 850, page views per visit information 852, and/or bounce rate 854. One or more of the information shown in the table 842 can be similar to the information 822, 824, 826, 828, 830, 832, 834, and/or 836 in the widget 820 about the visitor engagement metrics. In some implementations, the information presented in the table 842 can be sorted based on any one or more of the information 846, 848, 844, 850, 852, and/or 858. In some implementations, the table 842 may present additional or other information corresponding to traffic and/or campaign details.

Sometimes, the information can be presented in the table 842 using visual or graphical elements, in addition to or instead of numeric and/or text values. For example, the visits information 846 and/or the unique visitors information 848 can be presented in the table 842 with text or numeric values and a visual line element, where the line element is shaded a particular indicia (e.g., green color, a pattern) that corresponds to the total number of visits and/or unique visitors. In some implementations, where the particular UTM source has very low numbers of visits and/or unique visitors (e.g., below a predetermined threshold value), that total number can be depicted on the line element with a different indicia, such as red color or a different pattern. The average visitor score information 844 can present the corresponding average score in a graphical or visual element (such as a circle) with text or numeric values indicating the score value. The page views per visit information 852 can be presented with text or numeric values and a visual line element, similar to the information 846 and/or 848. The line element for the information 852 can be shaded a different color or transitioning color that corresponds to the total number of page views per visit. As an illustrative example, the more page views per visit (using threshold values/ranges and/or based on comparison to other UTM sources), the richer or darker green a portion of the line element may be shaded. The fewer page views per visit, the less green a portion of the line element may be shaded. In fact, when the page views per visit becomes less than a predetermined threshold range or value, the portion of the line element may be shaded a different color, such as yellow, orange, and/or red. In some implementations, green may indicate a highest number of page views per visit. Red can indicate a lowest number of page views per visit. Orange, yellow, and light green can transition between the red indicia and the green indicia to indicate other numbers of page views per visit for the UTM sources shown in the table 842.

The GUI 860 of FIG. 8C illustrates campaign monitoring information for a particular website of a user (e.g., a website owner). The GUI 860 can include selectable options 862, 864, and 866 for toggling between different views of information regarding the campaign monitoring. The option 862 can be selected to view monitored campaigns for the user's designated website. The option 864 can be selected to view a campaign calendar for the user's website. The option 866 can be selected to view unmonitored UTM links for the user's website. Selecting any of the options 862, 864, and 866 can cause the GUI 860 to be automatically updated to present relevant information associated with the selected option. Selecting any one of the options 862, 864, and 866 may also cause the relevant information to be presented in a pop-out window overlaying at least a portion of the GUI 860 and/or in one or more other GUIs presented at the user's device.

The GUI 860 may also include a button 868, which can be selected to create a new campaign. Moreover, the GUI 860 may present widgets 870, 872, 874, and/or 876. The widgets 870, 872, 874, and/or 876 are merely illustrative any one or more other or additional widgets may also be presented in the GUI 860. The widget 870 can be selected to view, in a table 878 described further below, information associated with all campaigns that the user is currently monitoring. The widget 872 can be selected to view, in the table 878, most popular campaigns (e.g., campaigns that generated the most traffic over some period of time, such as a last 7 days). The widget 874 can be selected to view, in the table 878, top-performing campaigns (e.g., campaigns with a highest conversion rate(s) and/or number of visits). The widget 876 can be selected to view, in the table 878, non-performing campaigns (e.g., campaigns that have not generated any conversions or campaigns that generated less than a predetermined amount of conversions). Various other widgets can be presented or otherwise provided in the GUI 860 for viewing different type of information about the campaigns associated with the user and/or their website(s).

The table 878 can present information about the campaigns associated with the user and/or their website(s) based on user selection of the widgets 870, 872, 874, and/or 876. For example, for each campaign, the table 878 can present at least average visitor score information 880. The information 880 is similar to or the same as the information 844 depicted and described in the GUI 800 of FIGs. 8A and 8B. Advantageously, the average visitor score information 880 can indicate an average visitor engagement score that was determined using the disclosed techniques for each of the campaigns presented in the table 878. The table 878 may also include additional information for each of the campaigns presented therein, including one or more information described in reference to the GUI 800 of FIGs. 8A and 8B. As non-limiting examples, the table 878 may present, for each of the campaigns, information including but not limited to UTM links, number of visits, percentage of total visits, unique visitors, key metric completions, conversion rate, completions value, campaign start date, and/or campaign end date.

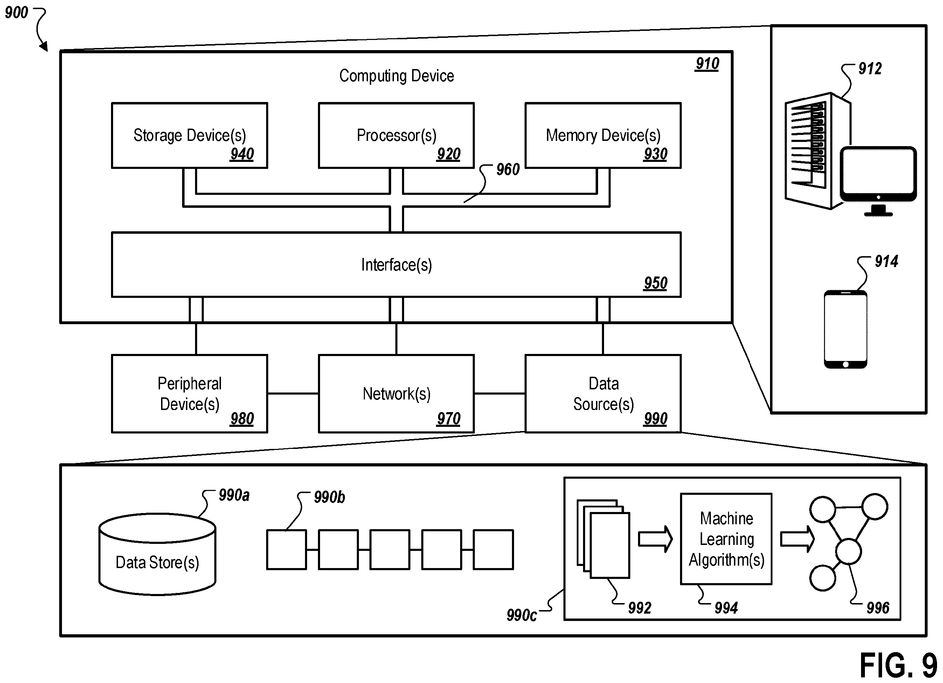

FIG. 9 is a schematic diagram that shows an example of a computing system 900 that can be used to implement the techniques described herein. The computing system 900 includes one or more computing devices (e.g., computing device 910), which can be in wired and/or wireless communication with various peripheral device(s) 980, data source(s) 990, and/or other computing devices (e.g., over network(s) 970). The computing device 910 can represent various forms of stationary computers 912 (e.g., workstations, kiosks, servers, mainframes, edge computing devices, quantum computers, etc.) and mobile computers 914 (e.g., laptops, tablets, mobile phones, personal digital assistants, wearable devices, etc.). In some implementations, the computing device 910 can be included in (and/or in communication with) various other sorts of devices, such as data collection devices (e.g., devices that are configured to collect data from a physical environment, such as microphones, cameras, scanners, sensors, etc.), robotic devices (e.g., devices that are configured to physically interact with objects in a physical environment, such as manufacturing devices, maintenance devices, object handling devices, etc.), vehicles (e.g., devices that are configured to move throughout a physical environment, such as automated guided vehicles, manually operated vehicles, etc.), or other such devices. Each of the devices (e.g., stationary computers, mobile computers, and/or other devices) can include components of the computing device 910, and an entire system can be made up of multiple devices communicating with each other. For example, the computing device 910 can be part of a computing system that includes a network of computing devices, such as a cloud-based computing system, a computing system in an internal network, or a computing system in another sort of shared network. Processors of the computing device (910) and other computing devices of a computing system can be optimized for different types of operations, secure computing tasks, etc. The components shown herein, and their functions, are meant to be examples, and are not meant to limit implementations of the technology described and/or claimed in this document.

The computing device 910 includes processor(s) 920, memory device(s) 930, storage device(s) 940, and interface(s) 950. Each of the processor(s) 920, the memory device(s) 930, the storage device(s) 940, and the interface(s) 950 are interconnected using a system bus 960. The processor(s) 920 are capable of processing instructions for execution within the computing device 910, and can include one or more single-threaded and/or multi-threaded processors. The processor(s) 920 are capable of processing instructions stored in the memory device(s) 930 and/or on the storage device(s) 940. The memory device(s) 930 can store data within the computing device 910, and can include one or more computer-readable media, volatile memory units, and/or non-volatile memory units. The storage device(s) 940 can provide mass storage for the computing device 910, can include various computer-readable media (e.g., a floppy disk device, a hard disk device, a tape device, an optical disk device, a flash memory or other similar solid state memory device, or an array of devices, including devices in a storage area network or other configurations), and can provide date security/encryption capabilities.

The interface(s) 950 can include various communications interfaces (e.g., USB, Near-Field Communication (NFC), Bluetooth, WiFi, Ethernet, wireless Ethernet, etc.) that can be coupled to the network(s) 970, peripheral device(s) 980, and/or data source(s) 990 (e.g., through a communications port, a network adapter, etc.). Communication can be provided under various modes or protocols for wired and/or wireless communication. Such communication can occur, for example, through a transceiver using a radio-frequency. As another example, communication can occur using light (e.g., laser, infrared, etc.) to transmit data. As another example, short-range communication can occur, such as using Bluetooth, WiFi, or other such transceiver. In addition, a GPS (Global Positioning System) receiver module can provide location-related wireless data, which can be used as appropriate by device applications. The interface(s) 950 can include a control interface that receives commands from an input device (e.g., operated by a user) and converts the commands for submission to the processors 920. The interface(s) 950 can include a display interface that includes circuitry for driving a display to present visual information to a user. The interface(s) 950 can include an audio codec which can receive sound signals (e.g., spoken information from a user) and convert it to usable digital data. The audio codec can likewise generate audible sound, such as through an audio speaker. Such sound can include real-time voice communications, recorded sound (e.g., voice messages, music files, etc.), and/or sound generated by device applications.

The network(s) 970 can include one or more wired and/or wireless communications networks, including various public and/or private networks. Examples of communication networks include a LAN (local area network), a WAN (wide area network), and/or the Internet. The communication networks can include a group of nodes (e.g., computing devices) that are configured to exchange data (e.g., analog messages, digital messages, etc.), through telecommunications links. The telecommunications links can use various techniques (e.g., circuit switching, message switching, packet switching, etc.) to send the data and other signals from an originating node to a destination node. In some implementations, the computing device 910 can communicate with the peripheral device(s) 980, the data source(s) 990, and/or other computing devices over the network(s) 970. In some implementations, the computing device 910 can directly communicate with the peripheral device(s) 980, the data source(s), and/or other computing devices.

The peripheral device(s) 980 can provide input/output operations for the computing device 910. Input devices (e.g., keyboards, pointing devices, touchscreens, microphones, cameras, scanners, sensors, etc.) can provide input to the computing device 910 (e.g., user input and/or other input from a physical environment). Output devices (e.g., display units such as display screens or projection devices for displaying graphical user interfaces (GUIs)), audio speakers for generating sound, tactile feedback devices, printers, motors, hardware control devices, etc.) can provide output from the computing device 910 (e.g., user-directed output and/or other output that results in actions being performed in a physical environment). Other kinds of devices can be used to provide for interactions between users and devices. For example, input from a user can be received in any form, including visual, auditory, or tactile input, and feedback provided to the user can be any form of sensory feedback (e.g., visual feedback, auditory feedback, or tactile feedback).

The data source(s) 990 can provide data for use by the computing device 910, and/or can maintain data that has been generated by the computing device 910 and/or other devices (e.g., data collected from sensor devices, data aggregated from various different data repositories, etc.). In some implementations, one or more data sources can be hosted by the computing device 910 (e.g., using the storage device(s) 940). In some implementations, one or more data sources can be hosted by a different computing device. Data can be provided by the data source(s) 990 in response to a request for data from the computing device 910 and/or can be provided without such a request. For example, a pull technology can be used in which the provision of data is driven by device requests, and/or a push technology can be used in which the provision of data occurs as the data becomes available (e.g., real-time data streaming and/or notifications). Various sorts of data sources can be used to implement the techniques described herein, alone or in combination.

In some implementations, a data source can include one or more data store(s) 990a. The database(s) can be provided by a single computing device or network (e.g., on a file system of a server device) or provided by multiple distributed computing devices or networks (e.g., hosted by a computer cluster, hosted in cloud storage, etc.). In some implementations, a database management system (DBMS) can be included to provide access to data contained in the database(s) (e.g., through the use of a query language and/or application programming interfaces (APIs)). The database(s), for example, can include relational databases, object databases, structured document databases, unstructured document databases, graph databases, and other appropriate types of databases.

In some implementations, a data source can include one or more blockchains 990b. A blockchain can be a distributed ledger that includes blocks of records that are securely linked by cryptographic hashes. Each block of records includes a cryptographic hash of the previous block, and transaction data for transactions that occurred during a time period. The blockchain can be hosted by a peer-to-peer computer network that includes a group of nodes (e.g., computing devices) that collectively implement a consensus algorithm protocol to validate new transaction blocks and to add the validated transaction blocks to the blockchain. By storing data across the peer-to-peer computer network, for example, the blockchain can maintain data quality (e.g., through data replication) and can improve data trust (e.g., by reducing or eliminating central data control).

In some implementations, a data source can include one or more machine learning systems 990c. The machine learning system(s) 990c, for example, can be used to analyze data from various sources (e.g., data provided by the computing device 910, data from the data store(s) 990a, data from the blockchain(s) 990b, and/or data from other data sources), to identify patterns in the data, and to draw inferences from the data patterns. In general, training data 992 can be provided to one or more machine learning algorithms 994, and the machine learning algorithm(s) can generate a machine learning model 996. Execution of the machine learning algorithm(s) can be performed by the computing device 910, or another appropriate device. Various machine learning approaches can be used to generate machine learning models, such as supervised learning (e.g., in which a model is generated from training data that includes both the inputs and the desired outputs), unsupervised learning (e.g., in which a model is generated from training data that includes only the inputs), reinforcement learning (e.g., in which the machine learning algorithm(s) interact with a dynamic environment and are provided with feedback during a training process), or another appropriate approach. A variety of different types of machine learning techniques can be employed, including but not limited to convolutional neural networks (CNNs), deep neural networks (DNNs), recurrent neural networks (RNNs), and other types of multi-layer neural networks.

Various implementations of the systems and techniques described herein can be realized in digital electronic circuitry, integrated circuitry, specially designed ASICs (application specific integrated circuits), computer hardware, firmware, software, and/or combinations thereof. A computer program product can be tangibly embodied in an information carrier (e.g., in a machine-readable storage device), for execution by a programmable processor. Various computer operations (e.g., methods described in this document) can be performed by a programmable processor executing a program of instructions to perform functions of the described implementations by operating on input data and generating output. The described features can be implemented in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, by a computer to perform a certain activity or bring about a certain result. A computer program can be written in any form of programming language, including compiled or interpreted languages, and can be deployed in any form, including as a stand-alone program or as a module, component, subroutine, or other unit suitable for use in a computing environment. A computer program product can be a computer- or machine-readable medium, such as a storage device or memory device. As used herein, the terms machine-readable medium and computer-readable medium refer to any computer program product, apparatus and/or device (e.g., magnetic discs, optical disks, memory, etc.) used to provide machine instructions and/or data to a programmable processor, including a machine-readable medium that receives machine instructions as a machine-readable signal. The term machine-readable signal refers to any signal used to provide machine instructions and/or data to a programmable processor.

Suitable processors for the execution of a program of instructions include, by way of example, both general and special purpose microprocessors, and can be a single processor or one of multiple processors of any kind of computer. Generally, a processor will receive instructions and data from a read-only memory or a random access memory or both. The elements of a computer are a processor for executing instructions and one or more memory devices for storing instructions and data. Generally, a computer can also include, or can be operatively coupled to communicate with, one or more mass storage devices for storing data files. Such devices can include magnetic disks (e.g., internal hard disks and/or removable disks), magneto-optical disks, and optical disks. Storage devices suitable for tangibly embodying computer program instructions and data can include all forms of non-volatile memory, including by way of example semiconductor memory devices, flash memory devices, magnetic disks (e.g., internal hard disks and removable disks), magneto-optical disks, and optical disks. The processor and the memory can be supplemented by, or incorporated in, ASICs (application-specific integrated circuits).

The systems and techniques described herein can be implemented in a computing system that includes a back end component (e.g., a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). The computer system can include clients and servers, which can be generally remote from each other and typically interact through a network, such as the described one. The relationship of client and server arises by virtue of computer programs running on the respective computers and having a client-server relationship to each other.

In one or more implementations, a design of GUIs or portions thereof may include one or more of the ornamental features shown in FIGs. 5, 6A, 6B, 7A, 7B, 8A, 8B, and/or 8C. The design may include one or more combinations or sub-combinations of elements 502-512 in FIG. 5, elements 602-632 in FIG. 6A, elements 602-658 in FIG. 6B, elements 704-718 in FIG. 7A, elements 720-730 in FIG. 7B, elements 802-838 in FIG. 8A, elements 840-854 in FIG. 8B, and/or elements 860-880 in FIG. 8C. The design may additionally or alternatively include any subset(s) of those elements or other related elements that are not expressly called out but are depicted in FIGs. 5, 6A, 6B, 7A, 7B, 8A, 8B, and/or 8C.

While this specification contains many specific implementation details, these should not be construed as limitations on the scope of the disclosed technology or of what may be claimed, but rather as descriptions of features that may be specific to particular embodiments of particular disclosed technologies. Certain features that are described in this specification in the context of separate embodiments can also be implemented in combination in a single embodiment in part or in whole. Conversely, various features that are described in the context of a single embodiment can also be implemented in multiple embodiments separately or in any suitable subcombination. Moreover, although features may be described herein as acting in certain combinations and/or initially claimed as such, one or more features from a claimed combination can in some cases be excised from the combination, and the claimed combination may be directed to a subcombination or variation of a subcombination. Similarly, while operations may be described in a particular order, this should not be understood as requiring that such operations be performed in the particular order or in sequential order, or that all operations be performed, to achieve desirable results. Particular embodiments of the subject matter have been described. Other embodiments are within the scope of the following claims.

## Claims

1. A method for designating and applying a scoring framework to score a website based on visitor engagement, the method comprising:
receiving, by a computer system, tracking data that is recorded at each of a plurality of client-side computing devices when respective users perform actions, during respective sessions, in a website associated with a website owner;
identifying, by the computer system, events in the tracking data, wherein at least a portion of the events are related to specific DOM elements on the website;
transmitting, by the computer system and to a computing device of the website owner, the identified events for presentation in a graphical user interface (GUI) display at the computing device of the website owner;
receiving, by the computer system and from the computing device of the website owner, input indicating (i) selection of a subset of the identified events to be tracked and (ii) a score value assignment for each event in the subset of events;
designating, by the computer system, a scoring framework based on the received input, wherein the scoring framework comprises the selected events to be tracked and the corresponding score value assignments for the website;
applying, by the computer system, the scoring framework to the tracking data, wherein applying the scoring framework comprises:
identifying, in the tracking data, presence of one or more of the selected events from the scoring framework, and
assigning, to each of the identified one or more of the selected events, the corresponding score value; and
generating, by the computer system, an average visitor engagement score for the website based on applying the scoring framework.

2. The method of claim 1, wherein the respective sessions comprise current sessions with the website.

3. The method of claim 1, wherein the respective sessions comprise historic sessions with the website.

4. The method of claim 1, wherein the respective sessions comprise current sessions and historic sessions with the website.

5. The method of claim 4, wherein generating, by the computer system, an average visitor engagement score for the website comprises (i) generating an average visitor engagement score for the current sessions and (ii) generating an average visitor engagement score for the historic sessions.

6. The method of claim 5, wherein the method further comprises:
generating, by the computer system, output indicating a comparison of the average visitor engagement score for the current sessions with the average visitor engagement score for the historic sessions; and
transmitting, by the computer system and to the computing device of the website owner, the output for presentation in a GUI display at the computing device of the website owner.

7. The method of claim 6, wherein the output comprises a graphical element that visually displays the comparison of the average visitor engagement score for the current sessions with the average visitor engagement score for the historic sessions.

8. A method for designating a scoring framework for scoring a website based on visitor engagement, the method comprising:
receiving, by a computer system and from a client-side computing device, tracking data that is recorded at the client-side computing device when a user at the client-side computing device performs actions, during a session, in a website associated with a website owner;
identifying, by the computer system, events in the tracking data;
transmitting, by the computer system and to a computing device of the website owner, the identified events for presentation in a graphical user interface (GUI) display at the computing device of the website owner;
receiving, by the computer system and from the computing device of the website owner, input indicating (i) selection of a subset of the identified events to be tracked and (ii) a score value assignment for each event in the subset of events;
designating, by the computer system, a scoring framework based on the received input, wherein the scoring framework comprises the selected events to be tracked and the corresponding score value assignments, wherein the scoring framework is automatically applied, by the computer system, to tracking data from sessions with the website that are associated with a plurality of client-side computing devices to determine visitor engagement scores for the website; and
storing, by the computer system, the scoring framework in association with at least one of an identifier uniquely associated with the website owner or an identifier uniquely associated with the website.

9. The method of claim 8, wherein the method further comprises:
receiving, by the computer system and from the plurality of client-side computing devices, the tracking data for the sessions with the website;
applying, by the computer system, the scoring framework to the tracking data for the sessions with the website to assign scores to the sessions, wherein applying the scoring framework comprises:
identifying, in the tracking data for each session of the sessions, presence of one or more of the selected events from the scoring framework, and
assigning, to each of the identified one or more of the selected events, the corresponding score value; and
generating, by the computer system, an average visitor engagement score for the website based on assigning the scores to the sessions.

10. The method of claim 9, wherein the method further comprises:
generating, by the computer system, output for the average visitor engagement score; and
transmitting, by the computer system to the computing device of the website owner, instructions for presenting the output for the average visitor engagement score in a GUI display at the computing device of the website owner.

11. The method of claim 10, wherein the instructions, when executed by the computing device of the website owner, cause the computing device of the website owner to present in the GUI display, a visual element indicating a value of the average visitor engagement score.

12. The method of claim 10, wherein the instructions, when executed by the computing device of the website owner, cause the computing device of the website owner to present in the GUI display, a graphical element indicating a change in value of the average visitor engagement score over one or more periods of time.

13. The method of claim 10, wherein the instructions, when executed by the computing device of the website owner, cause the computing device of the website owner to present in the GUI display, textual elements indicating event triggers that contributed to a determination of the average visitor engagement score.

14. The method of claim 13, wherein the method further comprises:
retrieving, by the computer system from a data store, historic tracking data from historic sessions associated with the website;
applying, by the computer system, the scoring framework to the historic tracking data to retroactively generate visitor engagement scores for the historic sessions associated with the website; and
generating, by the computer system, output indicating the retroactively generated visitor engagement scores for the historic sessions and the average visitor engagement score for the sessions, wherein the sessions comprise a current period of time.

15. The method of claim 13, wherein the events comprise at least one of clicks, scrolls, idleness, user inputs, outbound links, views, or URL visits.

16. A method for determining a visitor engagement score for a website using a scoring framework, the method comprising:
receiving, by a computer system, tracking data that is recorded at a plurality of client-side computing devices when respective users performs actions, during respective sessions, in a website associated with a website owner;
retrieving, by the computer system and from a data store, a scoring framework associated with the website, wherein the scoring framework comprises website owner-selected events to be tracked in the tracking data and website owner-designated score values to be assigned to each instance of the website owner-selected events that are identified by the computer system in the tracking data for the sessions;
applying, by the computer system, the scoring framework to the tracking data for the sessions, wherein applying the scoring framework comprises:
identifying, in the tracking data, presence of one or more of the website owner-selected events from the scoring framework, and
assigning, to each of the identified events, the corresponding website owner-designated score values; and
generating, by the computer system, an average visitor engagement score for the website for the sessions based on applying the scoring framework.

17. The method of claim 16, wherein the respective sessions comprise current sessions and historic sessions with the website.

18. The method of claim 17, wherein generating, by the computer system, an average visitor engagement score for the website comprises (i) generating an average visitor engagement score for the current sessions and (ii) generating an average visitor engagement score for the historic sessions.

19. The method of claim 18, wherein the method further comprises:
generating, by the computer system, output indicating a comparison of the average visitor engagement score for the current sessions with the average visitor engagement score for the historic sessions; and
transmitting, by the computer system and to a computing device of the website owner, the output for presentation in a GUI display at the computing device of the website owner.

20. The method of claim 16, wherein the method further comprises:
generating, by the computer system, output indicating the average visitor engagement score for the sessions; and
transmitting, by the computer system to a computing device of the website owner, the output for presentation in a GUI display at the computing device of the website owner.
